# EUROPEAN PATENT APPLICATION

(11) **EP 4 796 846 A1**
(43) Date of publication of application: **26.08.2026**
(21) Application number: 24878949.7
(22) Date of filing: 14.10.2024
(51) Int. Cl.: F24F 1/0063, F24F 13/22, F24F 13/28, F24F 13/30, F24F 13/20, F24F 11/89, F24F 1/42, F25B 41/40, F25B 41/30

(54) **AIR CONDITIONING DEVICE, CONTROL METHOD, AND RELATED DEVICE**

(30) Priority: 16.10.2023 CN 202311338089
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); WANG, Zhe, Shenzhen, Guangdong 518000 (CN); MI, Chang, Shenzhen, Guangdong 518000 (CN); XING, Siwei, Shenzhen, Guangdong 518000 (CN)
(74) Representative: Maiwald GmbH
(86) International application number: PCT/CN2024/124656
(87) International publication number: WO 2025/082305

(57) **Abstract**

The present disclosure relates to the technical field of air conditioning. Provided are an air conditioning device, a control method, and a related device. The air conditioning device comprises a liquid collection device, a heat exchange device, a water using device and a controller, the arrangement of the liquid collecting device and the water using device allows the liquid collecting device to collect liquid water generated by the heat exchange device, and then transport said water to the water using device to be used; water generated by the heat exchange device does not need to be directly discharged, but rather is utilized, which lowers the water discharge pressure of a discharge pipe, and reduces the probability that water will collect on the ground; also, the water generated by the heat exchange device can be fully utilized, and more water is saved. It can be understood that the heat exchange device can be used as an evaporator, heat absorption is carried out in the evaporation process, said heat absorption will cause water vapor in the air or another medium flow to form condensation or frost, and liquid water can be obtained by collecting the condensed water or water from melted frost via the liquid collection device.

## Description

The present disclosure claims priority to Chinese Patent Application "No. 202311338089.8", filed with China National Intellectual Property Administration on October 16, 2023, and entitled "AIR CONDITIONING DEVICE, CONTROL METHOD, AND RELATED DEVICE", the content of which is incorporated herein by reference in its entirety.

### TECHNICAL FIELD

The present disclosure relates to the technical field of air conditioning, and in particular, to an air conditioning device, a control method, and a related device.

### BACKGROUND

As a highly mature industry, the air conditioning industry has made air conditioning devices, such as air conditioners, the preferred choice among traditional white goods purchased by the public due to their wide popularity. At present, during operation, air conditioners produce condensed water. The inventors have recognized that, in the related art, a drainage pipe is provided to discharge the condensed water outdoors through the drainage pipe. However, this arrangement is likely to cause water accumulation on the ground, and for air conditioners of residents on upper floors, the discharge of the condensed water may also affect residents on lower floors.

### SUMMARY

The present disclosure aims to solve at least one of the technical problems existing in the prior art or the related art.

Therefore, a first aspect of the present disclosure provides an air conditioning device.

A second aspect of the present disclosure provides a control method.

A third aspect of the present disclosure provides a computer-readable storage medium.

A fourth aspect of the present disclosure provides a control apparatus.

In view of this, according to the first aspect of the embodiments of the present disclosure, an air conditioning device is provided. The air conditioning device includes:
a liquid collection apparatus, a heat exchange apparatus, a water-using apparatus, and a controller, where
one end of the liquid collection apparatus is in communication with the heat exchange apparatus, the other end of the liquid collection apparatus is in communication with the water-using apparatus, and the controller is configured to control the liquid collection apparatus to supply water to the water-using apparatus,
the liquid collection apparatus being configured to collect condensed water generated by the heat exchange apparatus.

In a feasible embodiment, the air conditioning device further includes:
a device main body, the device main body being provided with an air inlet and an air outlet, and the liquid collection apparatus, the heat exchange apparatus, the water-using apparatus, and the controller being all disposed in the device main body;
the water-using apparatus including a filter apparatus, the filter apparatus including a filter member and a cleaning member, the filter member being configured to filter an airflow flowing from the air inlet to the air outlet, the cleaning member including a water-using part in communication with the liquid collection apparatus, and the water-using part being configured to apply a liquid in the liquid collection apparatus to the filter member to clean the filter member.

In a feasible embodiment, the water-using part includes a spray head, and a nozzle of the spray head faces the filter member; and/or
the water-using part includes a water tank, and at least part of the filter member may be accommodated in the water tank.

In a feasible embodiment, the cleaning member further includes a cleaning part, and the cleaning part is configured to interfere with the filter member to remove debris on the filter member; and/or
the cleaning member further includes a motion part, the motion part is configured to drive the filter member and/or the water-using part to move to remove the debris on the filter member, and the motion part at least includes at least one of vibration, swing, or rotation.

In a feasible embodiment, the air conditioning device further includes:
a liquid enrichment assembly, the liquid enrichment assembly including an enrichment part and a regeneration part; and
a pipeline assembly, the pipeline assembly connecting the liquid enrichment assembly and the heat exchange apparatus, and the liquid collection apparatus being in communication with the heat exchange apparatus and/or the liquid enrichment assembly.

In a feasible embodiment, the pipeline assembly includes:
an input pipeline in communication with the liquid enrichment assembly and disposed upstream of an airflow in the enrichment part;
an output pipeline in communication with the liquid enrichment assembly and disposed downstream of the airflow in the enrichment part;
a moisture intake pipeline in communication with the heat exchange apparatus and disposed upstream of an airflow in the regeneration part;
a moisture release pipeline, one end of the moisture release pipeline being in communication with the liquid enrichment assembly and disposed downstream of the airflow in the regeneration part, and the other end of the moisture release pipeline being in communication with the heat exchange apparatus;
a first control valve, the first control valve being configured to communicate the input pipeline with the moisture release pipeline; and
a second control valve, the second control valve being configured to communicate the output pipeline with the moisture intake pipeline.

In a feasible embodiment, the liquid enrichment assembly further includes:
a first air supply member disposed in the input pipeline and/or the output pipeline and configured to cause air to flow through the enrichment part of the liquid enrichment assembly; and
a second air supply member disposed in the moisture intake pipeline and/or the moisture release pipeline and configured to cause air to flow through the regeneration part of the liquid enrichment assembly.

In a feasible embodiment, the first control valve is further configured to adjust an opening degree between the input pipeline and the moisture release pipeline; and
the second control valve is further configured to adjust an opening degree between the output pipeline and the moisture intake pipeline.

In a feasible embodiment, the liquid enrichment assembly includes:
a first housing, the enrichment part and the regeneration part being formed on the first housing;
a moisture adsorption member disposed in the first housing; and
a regeneration member configured to supply energy to the regeneration part to desorb water molecules.

In a feasible embodiment, the liquid enrichment assembly includes: an enrichment member configured to supply energy to the enrichment part;
the enrichment member includes at least one of a phase change heat exchanger, a Peltier effect heat exchanger, a fan, a liquid cooling heat exchanger, and a vortex tube; and/or
the regeneration member includes at least one of: thermal radiation, a hot end of a heat pump, a hot end of a heat pipe, and a solar heat source; and/or the liquid enrichment assembly further includes:
a driving member connected to the moisture adsorption member and configured to drive the moisture adsorption member to rotate.

In a feasible embodiment, the heat exchange apparatus includes:
a liquid collection heat exchanger, the liquid collection heat exchanger being configured to form condensed water and/or frost, and the liquid collection apparatus collecting, through an input end, the condensed water and/or liquid formed by melting of the frost:
a second housing, the liquid collection heat exchanger being disposed in the second housing, the second housing being configured to collect the condensed water and/or the liquid formed by the melting of the frost, the input end of the liquid collection apparatus being in communication with the second housing, and a pipeline assembly being in communication with the second housing.

In a feasible embodiment, the air conditioning device further includes:
an indoor heat exchanger;
a compressor, the compressor being connected to the indoor heat exchanger;
an outdoor heat exchanger, the outdoor heat exchanger being connected to the compressor;
a first throttling assembly, the throttling assembly being separately connected to the outdoor heat exchanger and the indoor heat exchanger; and
a first refrigerant pipeline, the refrigerant pipeline being in communication with the indoor heat exchanger, the compressor, the outdoor heat exchanger, and the first throttling assembly to form a refrigerant circulation.

In a feasible embodiment, the pipeline assembly is in communication with at least one of the indoor heat exchanger and the outdoor heat exchanger, and at least one of the indoor heat exchanger and the outdoor heat exchanger serves as a liquid collection heat exchanger of the heat exchange apparatus; and
in a case where the pipeline assembly is in communication with the outdoor heat exchanger and the indoor heat exchanger, the liquid collection apparatus includes a first water tank and a second water tank, the first water tank is in communication with the outdoor heat exchanger, and the second water tank is in communication with the indoor heat exchanger.

In a feasible embodiment, the air conditioning device further includes:
a second refrigerant pipeline, the second refrigerant pipeline being in communication with the heat exchange apparatus, one end of the second refrigerant pipeline being in communication with the indoor heat exchanger, and the other end of the second refrigerant pipeline being in communication with the compressor, such that a liquid collection heat exchanger of the heat exchange apparatus is connected in parallel with the outdoor heat exchanger;
a second throttling assembly, the second throttling assembly being separately connected to the indoor heat exchanger and the liquid collection heat exchanger; and/or,
a third air supply member, the third air supply member being configured to supply air to the heat exchange apparatus.

In a feasible embodiment, the air conditioning device further includes:
a third refrigerant pipeline, the third refrigerant pipeline being in communication with the heat exchange apparatus, one end of the third refrigerant pipeline being in communication with the first throttling assembly, and the other end of the third refrigerant pipeline being in communication with the indoor heat exchanger;
a third control valve, the third control valve being disposed on the third refrigerant pipeline; and/or
a fourth air supply member, the fourth air supply member being configured to supply air to a liquid collection heat exchanger of the heat exchange apparatus.

In a feasible embodiment, the air conditioning device further includes:
a third housing, the outdoor heat exchanger, the compressor, and the liquid collection apparatus being disposed in the third housing.

In a feasible embodiment, the air conditioning device further includes:
an outdoor unit housing, the liquid enrichment assembly and the outdoor heat exchanger being disposed in the outdoor unit housing;
an indoor unit housing, the indoor heat exchanger being disposed in the indoor unit housing; and
a fresh air module, an air intake port of the fresh air module being in communication with a first air inlet of the outdoor unit housing, and an output end of the fresh air module being connected to a second air inlet of the indoor unit housing.

According to the second aspect of the embodiments of the present disclosure, a control method is provided. The control method is used to control the air conditioning device according to any one of the above technical solutions, and the control method includes:
turning on a controller to control a liquid collection apparatus to supply water to a water-using apparatus in response to a water-using instruction.

In a feasible embodiment, the control method further includes:
adjusting a conduction mode of a pipeline assembly to enrich liquid water only by a liquid enrichment assembly in response to a first water collection instruction;
adjusting the conduction mode of the pipeline assembly to enrich the liquid water only by a heat exchange apparatus in response to a second water collection instruction; and
adjusting a conduction mode of- a channel assembly to enrich the liquid water by the liquid enrichment assembly and the heat exchange apparatus in response to a third water collection instruction.

In a feasible embodiment, a step of adjusting the the conduction mode of the pipeline assembly to enrich the liquid water only by the liquid enrichment assembly in response to the first water collection instruction includes:
controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and
controlling the moisture intake pipeline and the moisture release pipeline of the pipeline assembly to open, such that the liquid water is collected into the liquid collection apparatus.

In a feasible embodiment, a step of adjusting the conduction mode of the pipeline assembly to enrich the liquid water only by the heat exchange apparatus in response to the second water collection instruction includes:
in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with the liquid collection apparatus to serve as an evaporator to form condensed water and/or frost; and
collecting the condensed water and/or water from melted frost by the liquid collection apparatus.

In a feasible embodiment, a step of adjusting the conduction mode of the pipeline assembly to enrich the liquid water by the liquid enrichment assembly and the heat exchange apparatus in response to the third water collection instruction includes:
in response to the third water collection instruction, controlling, by the first control valve of the pipeline assembly, the input pipeline to be connected to both the output pipeline and the moisture release pipeline, and controlling, by the second control valve of the pipeline assembly, the output pipeline to be connected to both the input pipeline and the moisture intake pipeline;
controlling a heat exchanger in communication with the liquid collection apparatus to serve as an evaporator to form condensed water and/or frost, and enriching the water molecules by the liquid enrichment assembly; and
collecting the condensed water, water from melted frost, and regenerated water from the liquid enrichment assembly by the liquid collection apparatus.

In a feasible embodiment, a step of collecting the condensed water, the water from the melted frost, and the regenerated water from the liquid enrichment assembly by the liquid collection apparatus includes:
upon formation of the frost on the evaporator, controlling controlling the first control valve to disconnect the path between the input pipeline and the moisture release pipeline, and controlling the second control valve to disconnect the path between the output pipeline and the moisture intake pipeline, and defrosting the evaporator using air flowing through a regeneration part.

In a feasible embodiment, the control method further includes:
generating, based on a water usage demand, the first water collection instruction, the second water collection instruction, or the third water collection instruction; and/or
generating, based on a water content of external air, the first water collection instruction, the second water collection instruction, or the third water collection instruction.

In a feasible implementation, a step of generating, based on the water usage demand, the first water collection instruction, the second water collection instruction, or the third water collection instruction includes:
generating the second water collection instruction in a case where the water usage demand is less than a first threshold;
generating the first water collection instruction in a case where the water usage demand is greater than or equal to the first threshold and less than a second threshold; and
generating the third water collection instruction in a case where the water usage demand is greater than or equal to the second threshold,
where a value of the first threshold is less than that of the second threshold; and
a step of generating, based on the water content of the external air, the first water collection instruction, the second water collection instruction, or the third water collection instruction includes:
generating the third water collection instruction in a case where the water content is less than a third threshold;
generating the first water collection instruction in a case where the water content is greater than or equal to the third threshold and less than a fourth threshold; and
generating the second water collection instruction in a case where the water content is greater than a fifth threshold,
where a value of the third threshold is less than that of the fourth threshold.

According to the third aspect of the embodiments of the present disclosure, a computer-readable storage medium is provided.

The computer-readable storage medium stores a computer program to implement the control method according to any one of the above technical solutions.

According to the fourth aspect of the embodiments of the present disclosure, a control method control apparatus is provided. The control apparatus includes:
a memory storing a computer program; and
a processor executing the computer program,
where the processor, when executing the computer program, implements the control method according to any one of the above technical solutions.

Compared with the prior art, the present disclosure includes at least the following beneficial effects.

In the air conditioning device provided according to the embodiments of the present disclosure, by means of the arrangement of the liquid collection apparatus and the water-using apparatus, the liquid collection apparatus can collect the liquid water generated by the heat exchange apparatus, and then deliver the liquid water to the water-using apparatus for use. The water generated by the heat exchange apparatus does not need to be directly discharged, but is instead used. In an aspect, the drainage pressure of the drainage pipe is reduced, and the probability of water accumulation on the ground is reduced. In another aspect, the water generated by the heat exchange apparatus can be fully used, and more water is saved. It can be understood that the heat exchange apparatus may serve as an evaporator, and the heat exchange apparatus may absorb heat during evaporation. The heat absorption may cause water vapor in the initial air or other medium flow to form condensed water or frost. The liquid water may be obtained by collecting the condensed water or water from melted frost using the liquid collection apparatus.

### BRIEF DESCRIPTION OF THE DRAWINGS

The following drawings of the present disclosure are used herein as part of the embodiments of the present disclosure for understanding the present disclosure. The embodiments of the present disclosure and descriptions thereof are shown in the drawings to explain the principles of the present disclosure.
FIG. 1 is a schematic structural diagram of a liquid enrichment assembly and a pipeline assembly provided according to an embodiment of the present disclosure.
FIG. 2 is a schematic structural diagram of an air conditioning device provided according to a first embodiment of the present disclosure.
FIG. 3 is a schematic structural diagram of an air conditioning device provided according to a second embodiment of the present disclosure.
FIG. 4 is a schematic structural diagram of an air conditioning device provided according to a third embodiment of the present disclosure.
FIG. 5 is a schematic structural diagram of an air conditioning device provided according to a fourth embodiment of the present disclosure.
FIG. 6 is a schematic structural diagram of an air conditioning device provided according to a fifth embodiment of the present disclosure.
FIG. 7 is a schematic structural diagram of an air conditioning device provided according to a sixth embodiment of the present disclosure.
FIG. 8 is a schematic structural diagram of a filter apparatus of an air conditioning device provided according to an embodiment of the present disclosure.
FIG. 9 is a schematic structural diagram of a filter apparatus of an air conditioning device provided according to another embodiment of the present disclosure.
FIG. 10 is a schematic step flowchart of a control method for an air conditioning device provided according to an embodiment of the present disclosure.
FIG. 11 is a schematic step flowchart of a control method for an air conditioning device provided according to another embodiment of the present disclosure.
FIG. 12 is a structural block diagram of a computer-readable storage medium provided according to an embodiment of the present disclosure.
FIG. 13 is a structural block diagram of a control apparatus provided according to an embodiment of the present disclosure.

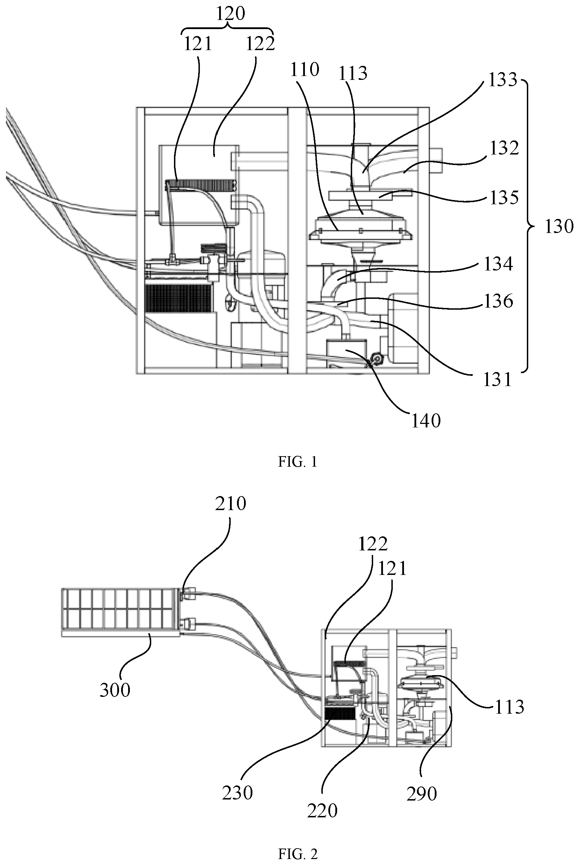

The correspondence relationships between reference numerals and component names in FIGS. 1 to 9 are as follows:
110 liquid enrichment assembly, 120 heat exchange apparatus, 130 pipeline assembly, 140 liquid collection apparatus;
111 enrichment part, 112 regeneration part, 113 first housing, 114 driving member, 121 liquid collection heat exchanger, 122 second housing, 131 input pipeline, 132 output pipeline, 133 moisture intake pipeline, 134 moisture release pipeline, 135 first control valve, 136 second control valve, 137 first air supply member, 138 second air supply member, 141 first water tank, 142 second water tank;
210 indoor heat exchanger, 220 compressor, 230 outdoor heat exchanger, 240 first throttling assembly, 250 second throttling assembly, 260 third control valve, 280 humidifier, 290 outdoor unit housing, 300 indoor unit housing, 310 fresh air module, 320 filter apparatus;
321 filter member, 322 cleaning member, 3211 first filter apparatus, 3212 second filter apparatus, 3221 water-using part, 3222 cleaning part, 3223 motion part.

### DETAILED DESCRIPTION

In the following description, numerous specific details are set forth to provide a more thorough understanding of the technical solutions provided according to the present disclosure. However, it will be apparent to those skilled in the art that the technical solutions provided according to the present disclosure may be implemented without one or more of these details.

It should be noted that the terms used herein are only for the purpose of describing specific embodiments, and are not intended to limit illustrative embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Illustrative embodiments according to the present disclosure will now be described in more detail with reference to the drawings. However, these illustrative embodiments may be implemented in various forms and should not be construed as being limited to the embodiments set forth herein. It should be understood that these embodiments are provided to make the disclosure of the present disclosure thorough and complete, and to fully convey the concepts of these illustrative embodiments to those of ordinary skill in the art.

As shown in FIGS. 1 to 9, embodiments of the present disclosure provide an air conditioning device. Specifically, the air conditioning device may be a wall-mounted air conditioning device, a window air conditioning device, a floor-standing air conditioning device, and the like.

The air conditioning device provided according to the embodiment of the present disclosure includes: a liquid collection apparatus 140, a heat exchange apparatus 120, a water-using apparatus, and a controller. One end of the liquid collection apparatus 140 is in communication with the heat exchange apparatus 120, the other end of the liquid collection apparatus 140 is in communication with the water-using apparatus, and the controller is configured to control the liquid collection apparatus 140 to supply water to the water-using apparatus. The liquid collection apparatus 140 is configured to collect condensed water generated by the heat exchange apparatus 120.

In the air conditioning device provided according to the embodiment of the present disclosure, by means of the arrangement of the liquid collection apparatus 140 and the water-using apparatus, the liquid collection apparatus 140 can collect the liquid water generated by the heat exchange apparatus 120, and then deliver the liquid water to the water-using apparatus for use. The water generated by the heat exchange apparatus 120 does not need to be directly discharged, but is instead used. In an aspect, the drainage pressure of the drainage pipe is reduced, and the probability of water accumulation on the ground is reduced. In another aspect, the water generated by the heat exchange apparatus 120 can be fully used, and more water is saved. It can be understood that the heat exchange apparatus 120 may serve as an evaporator, and the heat exchange apparatus may absorb heat during evaporation. The heat absorption may cause water vapor in the initial air or other medium flow to form condensed water or frost. The liquid water may be obtained by collecting the condensed water or water from melted frost using the liquid collection apparatus 140.

The heat exchange apparatus 120 may be a heat exchanger in the air conditioning device. Specifically, the air conditioning device may include an indoor unit housing 300 and/or an outdoor unit housing 290. Correspondingly, the heat exchange apparatus 120 may be an indoor heat exchange apparatus 120 and/or an outdoor heat exchange apparatus 120. It can be understood that the heat exchange apparatus 120 may also be other heat exchange mechanisms that meet the requirements. Specifically, taking the air conditioning device including the indoor unit housing 300 and the outdoor unit housing 290, and the heat exchange apparatus 120 including an indoor heat exchanger 210 and an outdoor heat exchanger 230 as an example, in order to quickly lower the temperature inside the room, an indoor unit heat exchanger of an air conditioner is at a temperature of approximately 4 °C. At a standard atmospheric pressure, the saturated vapor pressure of water is 813 Pa at 4 °C, which is significantly lower than 3169 Pa at 25 °C. When hot and humid air flows through the outdoor heat exchanger 230, the part of water that cannot be retained by the air condenses on the outdoor heat exchanger 230, thereby forming condensed water.

The water-using apparatus may be an apparatus in the air conditioning device that requires water, and the water used here may be understood as cleaning water or humidification water. That is, the air conditioning device may include a cleaning member 322 that requires water to perform on other components, and/or a humidification member that requires water to achieve a humidification function. It can be understood that the number of water-using apparatuses may be one, two, three, or other numbers.

The liquid collection apparatus 140 may include a water tank. The water tank is configured to store the collected condensed water from the heat exchange apparatus 120. It can be understood that the liquid collection apparatus 140 may further include pipelines connecting a water tank and water-using apparatuses, and water supply valves disposed on the pipelines. A control apparatus is connected to the water supply valves to supply the condensed water collected in the water tank to the water-using apparatuses.

As shown in FIG. 1, in the air conditioning apparatus provided according to the embodiment of the present disclosure, since one end of the liquid collection apparatus 140 is connected to the heat exchange apparatus 120 and the other end of the liquid collection apparatus 140 is connected to the water-using apparatus, the condensed water generated during the operation of the heat exchange apparatus 120 can be collected by the liquid collection apparatus 140, and the liquid collection apparatus 140 is controlled by the controller to supply water to the water-using apparatus, such that the condensed water generated during the operation of the heat exchange apparatus 120 can be collected and provided to the water-using apparatus for use. Compared with the related art in which the condensed water generated during the operation of the heat exchange apparatus 120 is directly discharged outdoors, the problems that the discharged condensed water causes water accumulation on the ground and the drainage of the air conditioning device on upper floors may affect the users on lower floors are avoided, the environment is protected, and the impact on other users is reduced. In addition, water resources are saved, and use costs are reduced, making the air conditioning device suitable for widespread application.

Moreover, since the liquid collection apparatus 140 continuously collects and accumulates the condensed water from the heat exchange apparatus 120 during the use of the air conditioning device, the liquid amount in the liquid collection apparatus 140 becomes large and sufficient, enabling it to meet different demands for the water usage amount of the water-using apparatus, such as the demand for a large water usage amount of the water-using apparatus. As a result, this avoids the problem that the water-using apparatus requires a large water usage amount that the air conditioning device cannot supply, which could otherwise affect the use effect of the water-using apparatus and the user experience.

As shown in FIGS. 2, 8, and 9, in some embodiments provided according to the present disclosure, the air conditioning device further includes: a device main body. The device main body is provided with an air inlet and an air outlet. The liquid collection apparatus 140, the heat exchange apparatus 120, the water-using apparatus, and the controller are all disposed in the device main body. The water-using apparatus includes a filter apparatus 320. The filter apparatus 320 includes a filter member 321 and a cleaning member 322. The filter member 321 is configured to filter an airflow flowing from the air inlet to the air outlet. The cleaning member 322 includes a water-using part 3221 in communication with the liquid collection apparatus 140. The water-using part 3221 is configured to apply liquid in the liquid collection apparatus 140 to the filter member **3**2**1** to clean the filter member 321.

By means of the arrangement of the device main body, mounting space and good protection for the liquid collection apparatus 140, the heat exchange apparatus 120, the water-using apparatus, and the controller are provided, which is beneficial to improving the neatness of the appearance of the air conditioning device, and the reliability and resistance to contamination of the liquid collection apparatus 140, the heat exchange apparatus 120, the water-using apparatus, and the controller, thereby improving the reliability of the air conditioning device.

As shown in FIGS. 2, 8, and 9, in the embodiments, the water-using apparatus includes the filter apparatus 320. Specifically, the filter apparatus 320 includes the filter member 321 and the cleaning member 322. The filter member 321 of the filter apparatus 320 is configured to filter the airflow flowing from the air inlet to the air outlet of the device main body to improve the cleanliness of the airflow flowing from the air outlet of the device main body to a subsequent channel and ensure the cleanliness of the airflow flowing from the air outlet. The cleaning member 322 includes the water-using part 3221 in communication with the liquid collection apparatus 140. The water-using part 3221 is configured to apply the liquid in the liquid collection apparatus 140 to the filter member 321 to clean the filter member 321.

That is, the filter apparatus 320 in the embodiments has a self-cleaning function. Specifically, the water-using part 3221 of the filter apparatus 320 may perform self-cleaning of the filter member 321 using the condensed water from the heat exchange apparatus 120 collected by the liquid collection apparatus 140, such that the filter member 321 can be kept in a good cleaning state for a long time to improve the filtration effect of the filter member 321. In addition, this can avoid problems caused by prolonged use of the filter member 321, such as excessive dust accumulation affecting airflow or the cumbersome and costly replacement of a new filter member 321. As a result, the air conditioning device can maintain a good air discharge effect, while simplifying the operation of replacing the filter member 321, making it convenient for the user to use and reducing use costs.

Specifically, the filter member 321 may be a filter screen, filter cotton, or other filter structures, which are not specifically limited in the present disclosure.

It can be understood that the self-cleaning of the filter member 321 by the water-using part 3221 requires a large amount of water. If the liquid is collected by adsorbing the moisture molecules in the air as in the related art, the demand for the water usage amount of the water-using part 3221 for cleaning the filter member 321 cannot be met. However, in the embodiment of the present disclosure, the condensed water from the heat exchange apparatus 120 is collected by the liquid collection apparatus 140, such that the demand for the water usage amount of the water-using part 3221 for cleaning the filter member 321 can be fully met, thereby ensuring a good cleaning effect and a good filtration effect of the filter member 321.

As shown in FIGS. 2, 8, and 9, in an example provided according to the present disclosure, the water-using part 3221 includes a spray head. A nozzle of the spray head faces the filter member 321, and the nozzle is connected to the liquid collection apparatus 140, such that the condensed water from the heat exchange apparatus 120 collected by the liquid collection apparatus 140 can be provided to the spray head and sprayed on the filter member 321 via the nozzle. Specifically, the cleaning operation of the filter member 321 is achieved by high-pressure spraying. The spray head has a simple structure, a small volume, and is easy to mount, and a large spraying area of the nozzle is beneficial to providing a good cleaning effect.

As shown in FIGS. 2, 8, and 9, in another example provided according to the present disclosure, the water-using part 3221 includes a water tank, and at least part of the filter member 321 may be accommodated in the water tank. The water tank is connected to the liquid collection apparatus 140, such that the condensed water from the heat exchange apparatus 120 collected by the liquid collection apparatus 140 can be delivered into the water tank, and the part of the filter member 321 located in the water tank is wetted or soaked for a long time to achieve the cleaning operation of the filter member 321. The water tank is easy to process and has a low cost, which is beneficial to reducing the manufacturing cost of the filter apparatus 320.

In yet another example provided according to the present disclosure, the water-using part 3221 may include both the spray head and the water tank. As a result, the filter member 321 can be cleaned simultaneously using the spray head and the water tank, thereby improving cleaning efficiency and further ensuring a good filtration effect of the filter member 321.

It can be understood that the filter apparatus 320 further includes a drainage part to discharge the wastewater remaining after the filter member 321 is cleaned by the water-using part 3221. Specifically, the drainage part can discharge the wastewater into a municipal wastewater pipe.

As shown in FIGS. 2, 8, and 9, in some embodiments provided according to the present disclosure, the cleaning member 322 further includes a cleaning part 3222. The cleaning part 3222 is configured to interfere with the filter member 321 to remove debris on the filter member 321, thereby improving the cleaning efficiency of the filter member 321 and helping ensure a good cleaning effect. The cleaning part 3222 may be a brush head. Through the interference between the brush head and the filter member 321 and in cooperation with the water-using part 3221, the cleaning part can thoroughly clean the filter member 321, thereby ensuring a good cleaning effect of the filter member 321.

The water-using part 3221 may directly apply the liquid in the liquid collection apparatus 140 to the filter member 321 and clean the filter member 321 in cooperation with the cleaning part 3222. Taking the water-using part 3221 being a spray head and the cleaning part 3222 being a brush head as an example, liquid may be sprayed onto the filter member 321 using the spray head to perform spray cleaning of the filter member 321, and in cooperation with the brushing of the brush head, the cleaning efficiency and cleaning effect of the filter member 321 can be improved. Alternatively, the water-using part 3221 may apply the liquid to the filter member 321 through the cleaning part 3222. Taking the cleaning part 3222 being a brush head as an example, the water-using part 3221 may apply the liquid in the liquid collection apparatus 140 to the brush head to wet the brush head, and then the wetted brush head interferes with the filter member 321 to perform wet cleaning on the filter member 321, thereby ensuring a good cleaning effect of the filter member 321.

In some embodiments provided according to the present disclosure, the cleaning member 322 further includes a motion part 3223, the motion part 3223 is configured to drive the filter member 321 and/or the water-using part 3221 to move to remove the debris on the filter member 321, and the motion part 3223 at least includes at least one of vibration, swing, or rotation.

The motion part 3223 drives the filter member 321 to move. For example, by driving the filter member 321 to vibrate, swing, or rotate by the motion part 3223, debris on the filter member 321 can be loosened. In cooperation with the water-using part 3221, both wet cleaning and motion-based cleaning of the filter member 321 can be achieved, thereby improving the comprehensiveness and thoroughness of cleaning of the filter member 321, improving the cleaning efficiency of the filter member 321, and ensuring a good cleaning effect. Taking the water-using part 3221 being a spray head and the driving part driving the filter member 321 to vibrate as an example, liquid is sprayed onto the filter member 321 through the spray head to perform spray cleaning on the filter member 321, and in cooperation with the vibration of the filter member 321, vibration-based wet cleaning of the filter member 321 can be achieved, thereby quickly removing debris on the filter member 321, improving the cleaning efficiency of the filter member 321, and ensuring a good cleaning effect of the filter member 321. Alternatively, taking the water-using part 3221 being a water tank as an example, and the driving part drives the filter member 321 to rotate and swing, during the rotation of the filter member 321, portions of the entire filter member 321 can be sequentially soaked in the water tank, and in cooperation with the swing of the filter member 321, rubbing-based wet cleaning of the filter member 321 can be achieved, thereby improving the comprehensiveness and thoroughness of cleaning of the filter member 321.

The motion part 3223 drives the water-using part 3221 to move, such that the liquid in the liquid collection apparatus 140 can be comprehensively and intensively applied to the filter member 321 using the water-using part 3221, thereby improving the thoroughness and effectiveness of cleaning the filter member 321, saving water resources, and ensuring a good cleaning effect. Taking the water-using part 3221 being a spray head as an example, the motion part 3223 drives the spray head to rotate, such that the liquid sprayed by the spray head can cover the filter member 321 more comprehensively to improve the cleaning effect. This arrangement can reduce the dimension of the spray head, so as to meet the design demand that the working structure for cleaning the filter member is compact and small in volume.

The driving part may also drive both the filter member 321 and the water-using part 3221 to move. For example, different driving parts may be provided to respectively drive the water-using part 3221 to rotate, for example, drive the spray head to rotate, such that the liquid sprayed by the spray head can cover the filter member 321 more comprehensively. In addition, the filter member 321 is driven to vibrate, swing, or rotate to loosen the debris on the filter member 321, thereby improving the cleaning efficiency of the filter member 321, improving the comprehensiveness and thoroughness of the cleaning of the filter member 321, and ensuring a good cleaning effect.

The cleaning member 322 may further include both the cleaning part 3222 and the motion part 3223. Taking the cleaning part 3222 being a brush head as an example, during the brushing of the filter member 321 using the brush head, the filter member 321 is driven to rotate using the motion part 3223, such that the brush head can sequentially interfere with different portions of the filter member 321, and the entire filter member 321 can be brushed using a small brush head, which can meet the design demand for a compact structure and a small volume of the filter apparatus 320. In addition, the motion part 3223 may also be used to drive the filter member 321 to vibrate, so as to achieve vibration-based cleaning of the filter member 321 synchronously, thereby further improving the cleaning efficiency of the filter member 321 and improving the cleaning effect.

In some examples, the cleaning member 322 may further include a cleaning filter, and the cleaning filter may be disposed in the cleaning part 3222, at an output end of the liquid collection apparatus 140, or on a path between the liquid collection apparatus 140 and the cleaning part 3222. The cleaning filter is configured to filter water output by the liquid collection apparatus 140 to the cleaning part 3222 or configured to filter water output by the cleaning part 3222. In this way, water used for cleaning is cleaner, which can reduce the probability of secondary contamination.

It can be understood that a vast majority of water collected by the air conditioning device provided according to the embodiments of the present disclosure is liquid water formed by condensation of water vapor in air or liquid water obtained by melting frost; therefore, when the liquid water source collection apparatus is in a clean state, the obtained liquid water is also clean. Adding a cleaning filter can further ensure the cleanliness of the water and make the water purer, which can further improve the user experience.

As shown in FIG. 1, the air conditioning device further includes: a liquid enrichment assembly 110, the liquid enrichment assembly 110 including an enrichment part 111 and a regeneration part 112; the heat exchange apparatus 120 and a pipeline assembly 130, the pipeline assembly 130 connecting the liquid enrichment assembly 110 and the heat exchange apparatus 120; and the liquid collection apparatus 140, the liquid collection apparatus 140 being in communication with the heat exchange apparatus 120 and/or the liquid enrichment assembly 110.

The air conditioning device provided according to the embodiments of the present disclosure includes the liquid enrichment assembly 110, the liquid collection apparatus 140, the heat exchange apparatus 120, and the pipeline assembly 130. During use, air can be introduced from the outside, the air can be in contact with the liquid enrichment assembly 110, the enrichment part 111 of the liquid enrichment assembly 110 can capture moisture or water vapor in the air, and then the regeneration part 112 can release the enriched moisture and water vapor, such that the liquid collection apparatus 140 can collect liquid water. The external air can also be introduced into the heat exchange apparatus 120, the air exchanges heat with the heat exchange apparatus 120 at a lower temperature, the moisture in the air condenses at a low temperature to form a condensate or frost, and the condensate or the melted frost can be collected by the liquid collection apparatus 140. The external air can also be first introduced into the liquid enrichment assembly 110, the moisture is enriched by the liquid enrichment assembly 110, and then the water content of the air discharged via the liquid enrichment assembly 110 will increase, and this part of the air can be discharged into the heat exchange apparatus 120 for further condensation. Based on this, the heat exchange apparatus 120 and the liquid enrichment assembly 110 jointly produce liquid water, such that the generation efficiency of the liquid water is higher. In summary, with the air conditioning device provided according to the embodiments of the present disclosure, the liquid water can be collected only using the liquid enrichment assembly 110 of the air conditioning device; or the liquid water can be collected only using the heat exchange apparatus 120; or the moisture can be first enriched using the liquid enrichment assembly 110 of the air conditioning device, and then the liquid water can be collected using the heat exchange apparatus 120. With the air conditioning device provided according to the embodiments of the present disclosure, the liquid water can be collected from the air, and then the liquid water can be stored by the liquid collection apparatus 140. When an electrical appliance, such as an air conditioning device, needs to use the liquid water, the liquid water can be directly output via the liquid collection apparatus 140 without additionally filling water, and the user does not need to fill water, which can improve the user experience and ensure the smooth execution of the water-using function of the electrical appliance.

In the air conditioning device provided according to the embodiments of the present disclosure, the liquid enrichment assembly 110 is connected to the heat exchange apparatus 120 through the pipeline assembly 130. Based on this, the air is controlled to flow through the liquid enrichment assembly 110 and the heat exchange apparatus 120. In addition, since the liquid enrichment assembly 110 and the heat exchange apparatus 120 are in communication with each other, the liquid collection apparatus 140 may be connected to the liquid enrichment assembly 110 and the heat exchange apparatus 120, or in communication with one of the liquid enrichment assembly 110 and the heat exchange apparatus 120, such that the liquid water can be collected and stored, and the liquid water can be collected more conveniently.

As shown in FIG. 1, in a feasible embodiment, the pipeline assembly 130 includes: an input pipeline 131 in communication with the liquid enrichment assembly 110 and disposed upstream of an airflow in the enrichment part 111; an output pipeline 132 in communication with the liquid enrichment assembly 110 and disposed downstream of an airflow in the enrichment part 111; a moisture intake pipeline 133 in communication with the heat exchange apparatus 120 and disposed upstream of an airflow in the regeneration part 112; a moisture release pipeline 134, one end of the moisture release pipeline 134 being in communication with the liquid enrichment assembly 110 and disposed downstream of the airflow in the regeneration part 112, and the other end of the moisture release pipeline being in communication with the heat exchange apparatus 120; a first control valve 136, the first control valve 136 being configured to communicate the input pipeline 131 with the moisture release pipeline 134; and a second control valve 135, the second control valve 135 being configured to communicate the output pipeline 132 with the moisture intake pipeline 133.

It can be understood that upstream and downstream are determined based on the flow direction of the medium. Taking the medium output by the pipeline assembly 130 being air as an example, the air medium first passes through the upstream of the airflow in the enrichment part 111, passes through the enrichment part 111, and is then output via the downstream of the airflow. Similarly, for the upstream of the airflow and the downstream of the airflow in the regeneration part 112, the air medium passes through the upstream of the airflow, passes through the regeneration part 112, and is then output through the downstream of the airflow. That is, the upstream of the airflow and the downstream of the airflow are determined based on the flow direction of the medium, rather than being determined based on the placement position or orientation of the liquid enrichment assembly 110.

In this technical solution, the structural configuration of the pipeline assembly 130 is further provided. The pipeline assembly 130 includes the input pipeline 131, the output pipeline 132, the moisture intake pipeline 133, and the moisture release pipeline 134. During use, the input pipeline 131 is configured to introduce external air, and the air is supplied to an enrichment zone through the input pipeline 131; then, the moisture and/or water vapor in the air is captured by the enrichment zone, and subsequently, the air is discharged out of the air conditioning device through the output pipeline 132. When it is necessary to use the liquid collection apparatus 140 to collect liquid, air is introduced via the moisture intake pipeline 133, flows through a regeneration zone, and is then supplied into the moisture release pipeline 134, and the airflow generated by the flowing air can carry the moisture or water vapor desorbed from the liquid enrichment assembly 110 through the heat exchange apparatus 120 and into the liquid collection apparatus 140, completing the collection of water.

In this technical solution, the moisture release pipeline 134 is in communication with the heat exchange apparatus 120, and when the heat exchange apparatus 120 is opened, the moisture or water vapor further exchanges heat with a condensation assembly, such that more water vapor can be condensed to form liquid water, and the liquid collection apparatus 140 can collect more liquid water.

In this technical solution, the moisture intake pipeline 133 is also in communication with the heat exchange apparatus 120, and based on this, the airflow for collecting the liquid enrichment assembly 110 can form a circulation between the liquid enrichment assembly 110 and the heat exchange apparatus 120, which can further improve the collection efficiency of the liquid.

In this technical solution, by means of the arrangement of the input pipeline 131, the output pipeline 132, the moisture intake pipeline 133, and the moisture release pipeline 134, the enrichment of moisture onto the liquid enrichment assembly 110 is facilitated. In addition, the collection of liquid from the liquid enrichment assembly 110 is facilitated, thereby making the collection of liquid water by the air conditioning device more convenient.

In this technical solution, the pipeline assembly 130 may further include the first control valve 136 and the second control valve 135. The first control valve 136 may control the opening of the input pipeline 131 and the moisture release pipeline 134, and the second control valve 135 may control the output pipeline 132 and the moisture intake pipeline 133. In this way, the air conditioning device has various operation modes. For example, the input pipeline 131 and the moisture release pipeline 134 are connected, and the output pipeline 132 and the moisture intake pipeline 133 are connected. In this case, the air does not flow through the enrichment part 111 and the regeneration part 112 of the liquid enrichment assembly 110, but the air enters the heat exchange apparatus 120 through the input pipeline 131 and the moisture release pipeline 134, and is discharged out of the heat exchange apparatus 120 through the output pipeline 132 and the moisture intake pipeline 133. In the process, the heat exchange apparatus 120 exchanges heat with the air, such that the water vapor in the air is condensed to form liquid water for collection by the liquid collection apparatus 140. For another example, the input pipeline 131 and the output pipeline 132 are connected, and the moisture intake pipeline 133 and the moisture release pipeline 134 are connected. In this way, the air first flows through the enrichment part 111 of the liquid enrichment assembly 110 through the input pipeline 131 and the output pipeline 132, and then flows through the regeneration part 112 through the moisture intake pipeline 133 and the moisture release pipeline 134 to collect moisture and water vapor, and the collected moisture and water vapor are supplied to the heat exchange apparatus 120 for condensation, which can improve the production efficiency of liquid water.

It can be understood that, in the air conditioning device provided according to the embodiments of the present disclosure, during use, the medium output via the pipeline assembly 130 may also be other water-containing media, and air is merely an example; the type and kind of the medium output via the pipeline assembly 130 are not specifically limited in the present disclosure.

In a feasible embodiment, the liquid enrichment assembly 110 further includes: a first air supply member 137 disposed in the input pipeline 131 and/or the output pipeline 132 and configured to cause air to flow through the enrichment part 111 of the liquid enrichment assembly 110; and a second air supply member 138 disposed in the moisture intake pipeline 133 and/or the moisture release pipeline 134 and configured to cause air to flow through the regeneration part 112 of the liquid enrichment assembly 110.

In this technical solution, the liquid enrichment assembly 110 may further include a first air supply member 137. By means of the arrangement of the first air supply member 137, it facilitates the formation of an airflow by the air passing through the input pipeline 131 and the output pipeline 132 to flow through the enrichment zone of the liquid enrichment assembly 110, thereby facilitating the capture of moisture and water vapor in the air by the moisture adsorption member.

In this technical solution, the liquid enrichment assembly 110 may further include a second air supply member 138. By means of the arrangement of the second air supply member 138, it facilitates the formation of an airflow by the air. The airflow passes through the moisture intake pipeline 133 and the moisture release pipeline 134 to carry the moisture and water vapor released via the moisture adsorption member, facilitating the flow of the moisture and water vapor through the heat exchange apparatus 120, so as to enrich liquid water in the liquid collection apparatus 140.

In a feasible embodiment, the first control valve 136 is further configured to adjust the opening degree between the input pipeline 131 and the moisture release pipeline 134; and the second control valve 135 is further configured to adjust the opening degree between the output pipeline 132 and the moisture intake pipeline 133.

In this technical solution, the first control valve 136 is further configured to adjust the opening degree between the input pipeline 131 and the moisture release pipeline 134, and the second control valve 135 is further configured to adjust the opening degree between the output pipeline 132 and the moisture intake pipeline 133; that is, the input pipeline 131 can be connected to both the moisture release pipeline 134 and the output pipeline 132, the output pipeline 132 can be connected to both the input pipeline 131 and the moisture intake pipeline 133, and the opening degree can be adjusted by the first control valve 136 and the second control valve 135. Based on this, during operation, the external air is introduced via the input pipeline 131, and moisture and water vapor in the external air are captured by the liquid enrichment assembly 110 and then flow out via the output pipeline 132. When the moisture is enriched, the airflow is output via the moisture intake pipeline 133, part of the airflow is discharged via the output pipeline 132, and part of the airflow enters the liquid enrichment assembly 110 and carries the moisture and water vapor enriched onto the liquid enrichment assembly 110 to enter the moisture release pipeline 134. Meanwhile, part of the airflow in the input pipeline 131 also enters the moisture release pipeline 134 and then enters the condensation assembly for condensation. Through condensation, a condensate or frost can be formed, and finally, the condensate and the melted frost are collected by the liquid collection apparatus 140, such that the liquid water can be enriched. In this way, the distribution of the air pressure in the air conditioning device is more uniform, further facilitating the production of liquid water.

In a feasible embodiment, the liquid enrichment assembly 110 includes: a first housing 113, the enrichment part 111 and the regeneration part 112 being formed on the first housing 113; a moisture adsorption member disposed in the first housing 113; and a regeneration member configured to supply energy to the regeneration part 112 to desorb water molecules.

In this technical solution, the liquid enrichment assembly 110 may include a first housing 113, a moisture adsorption member, an enrichment member, and a regeneration member. During use, the moisture adsorption member can rotate relative to the first housing 113. When air comes into contact with the moisture adsorption member via the enrichment zone on the first housing 113 through the input pipeline 131, the enrichment member provides energy to a region of the moisture adsorption member corresponding to the enrichment zone, and moisture or water vapor in the air can be captured by the region of the moisture adsorption member corresponding to the enrichment zone. When the moisture adsorption member faces toward the regeneration zone, by providing energy to the regeneration zone via the regeneration member, the moisture adsorption member can release water molecules, and the water molecules can enter the liquid collection apparatus 140 through the moisture release pipeline 134. Based on this, the capture and release of moisture can be achieved, thereby enabling the liquid collection apparatus 140 to enrich water.

In the embodiments of the present disclosure, the moisture adsorption member may be in the shape of a rotary disk, and the moisture adsorption member is provided with a moisture adsorption agent for adsorbing moisture. The moisture adsorption agent may be, for example, zeolite, modified/synthetic zeolite, a molecular sieve (including but not limited to a zeolite molecular sieve, an A/X/Y-type molecular sieve, a ZSM molecular sieve, a Beta molecular sieve, etc.), a polymeric moisture adsorption agent, alkali metal aluminosilicate (a 13X molecular sieve), lithium chloride, silica gel, modified silica gel, activated aluminum oxide, and other materials with moisture adsorbing performance. The polymeric moisture adsorption agent is also referred to as a polymer adsorbent, which has a lower regeneration temperature than conventional adsorbents such as silica gel, activated carbon, or a molecular sieve.

In an embodiment, the moisture adsorption member may be made of porous materials such as zeolite, molecular sieves, metal organic frameworks (metal organic frameworks, MOFs), covalent organic frameworks (covalent organic frameworks, COFs), nano-carbon, and silicon dioxide. In an embodiment, the moisture adsorption member may also be formed by filling with granular solids or particles made of at least one of the above porous materials.

In an embodiment, the moisture adsorption member may be a honeycomb-shaped or corrugated rotary disk carrying a moisture adsorption agent, capable of adsorbing and desorbing the adsorbed moisture for repeated desorption and regeneration.

In an embodiment, the moisture adsorption member includes an inorganic/organic fiber substrate (e.g., ceramic, glass fiber, MOFs, COFs, or cordierite). The fiber substrate is coated with a moisture adsorption agent such as a molecular sieve. The molecular sieve is uniformly distributed between the fiber substrates and on the surface of the fiber substrates, so as to adsorb moisture from the airflow. The molecular sieve may include a single crystal molecular sieve such as an A-type molecular sieve, an X/Y-type molecular sieve, a ZSM molecular sieve, a Beta molecular sieve, or a mixed crystal molecular sieve.

In a feasible embodiment, a moisture adsorption-desorption member further includes an enrichment member, and the enrichment member is configured to supply energy to the enrichment zone; the enrichment member includes at least one of a phase change heat exchanger, a Peltier effect heat exchanger, a fan, a liquid cooling heat exchanger, and a vortex tube. Based on this, it facilitates the supply of cold energy to the rotary disk via the enrichment member, thereby facilitating the capture of water vapor and moisture in the air by the rotary disk.

It can be understood that to reduce the cost of the air conditioning device, the enrichment member may be a fan.

In a feasible embodiment, the regeneration member includes at least one of: thermal radiation, a hot end of a heat pump, a hot end of a heat pipe, and a solar heat source. Based on this, it facilitates the supply of thermal energy to the rotary disk by the regeneration member, facilitates the release of moisture by the rotary disk, and facilitates the enrichment of liquid water by the liquid collection apparatus 140.

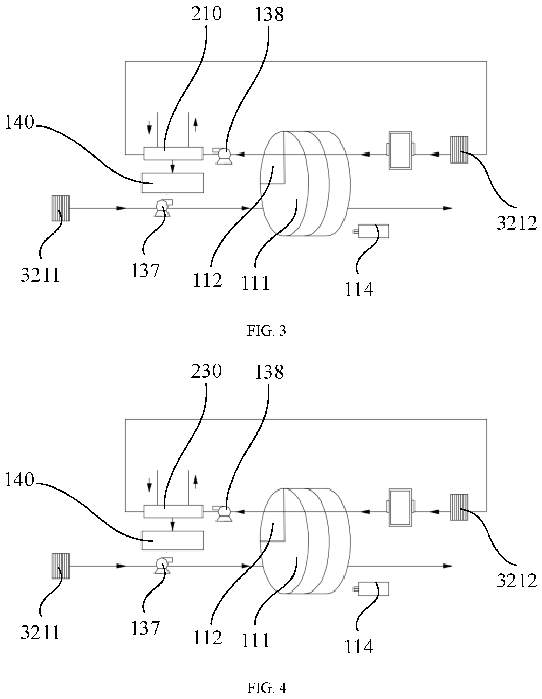

As shown in FIGS. 3 to 7, in a feasible embodiment, the liquid enrichment assembly 110 further includes: a driving member 114 connected to the moisture adsorption member and configured to drive the moisture adsorption member to rotate.

In this technical solution, the liquid enrichment assembly 110 may further include a driving member 114. The driving member 114 drives the moisture adsorption member to rotate, such that the moisture adsorption member may alternately rotate between the enrichment part 111 and the regeneration part 112, thereby improving the enrichment efficiency of the liquid.

In a feasible embodiment, the liquid collection apparatus 140 is configured to be connected to a water-using apparatus, and the water-using apparatus includes a humidification component and/or a cleaning component.

As shown in FIG. 2, in a feasible embodiment, the heat exchange apparatus 120 includes: a liquid collection heat exchanger 121. The liquid collection heat exchanger 121 is configured to form condensed water and/or frost, and the liquid enrichment assembly collects, through an input end, the condensed water and/or liquid formed by melting of the frost.

In this technical solution, the structural configuration of the heat exchange apparatus 120 is further provided. The heat exchange apparatus 120 includes a liquid collection heat exchanger 121. By controlling the temperature of the liquid collection heat exchanger 121, for example, the temperature of the liquid collection heat exchanger 121 may be controlled to be reduced, the temperature of the liquid collection heat exchanger 121 is reduced to be lower than the dew point temperature, such that the condensed water can be formed through condensation or the frost can be formed through desublimation on the liquid collection heat exchanger 121, and then the condensed water is collected by the liquid collection apparatus 140; or the liquid collection heat exchanger 121 is controlled to be heated to melt the frost to form liquid water, and then the liquid water is collected by the liquid collection apparatus 140, thereby enabling the enrichment of the liquid water.

In a feasible embodiment, the heat exchange apparatus 120 further includes: a second housing 122. The liquid collection heat exchanger 121 is disposed in the second housing 122, the second housing 122 is configured to collect the condensed water and/or the liquid formed by the melting of the frost, an input end of the liquid collection apparatus 140 is in communication with the second housing 122, and the pipeline assembly 130 is in communication with the second housing 122.

In this technical solution, in addition to the liquid collection heat exchanger 121, the heat exchange apparatus 120 may further include a second housing 122. By disposing the liquid collection heat exchanger 121 in the second housing 122, when the condensed water on the heat exchange apparatus 120 drips under the influence of gravity, the second housing 122 may play a role in receiving, and then the second housing 122 is connected to the liquid collection apparatus 140, thereby facilitating the enrichment of water by the liquid collection apparatus 140.

In this technical solution, the pipeline assembly 130 is in communication with the second housing 122 to facilitate heat exchange between the air and the liquid collection heat exchanger 121, thereby facilitating the formation of liquid water by condensation.

In some examples, both the moisture intake pipeline 133 and the moisture release pipeline 134 may be in communication with the second housing 122 to facilitate heat exchange between the air and the liquid collection heat exchanger 121, thereby facilitating the airflow to form a circulation and thus producing more liquid water.

It can be understood that considering that the liquid collection heat exchanger 121 condenses water vapor in the air to form condensed water, to make the liquid collection heat exchanger 121 come into full contact with the air, the second housing 122 may be arranged at the bottom of the liquid collection heat exchanger 121, and part of the liquid collection heat exchanger 121 is in an exposed state, which can improve the contact efficiency between the liquid collection heat exchanger 121 and the air while the second housing plays a role in receiving.

As shown in FIGS. 2 to 7, the air conditioning device further includes: an indoor heat exchanger 210; a compressor 220, the compressor 220 being connected to the indoor heat exchanger 210; an outdoor heat exchanger 230, the outdoor heat exchanger 230 being connected to the compressor 220; a first throttling assembly 240, the throttling assembly being separately connected to the outdoor heat exchanger 230 and the indoor heat exchanger 210; and a first refrigerant pipeline, the refrigerant pipeline being in communication with the indoor heat exchanger 210, the compressor 220, the outdoor heat exchanger 230, and the first throttling assembly 240 to form a refrigerant circulation.

In this technical solution, the air conditioning device may further include the indoor heat exchanger 210, the compressor 220, the outdoor heat exchanger 230, the first throttling assembly 240, and the first refrigerant pipeline. The refrigerant circulates among the indoor heat exchanger 210, the compressor 220, the outdoor heat exchanger 230, and the first throttling assembly 240 through the first refrigerant pipeline. By means of the compressor 220, the pressure state and temperature of the refrigerant can be adjusted, and further by controlling the flow direction of the refrigerant, the indoor heat exchanger 210 can be controlled to perform heating or cooling, such that the indoor temperature can be adjusted.

In a feasible embodiment, the pipeline assembly 130 is in communication with at least one of the indoor heat exchanger 210 and the outdoor heat exchanger 230, and at least one of the indoor heat exchanger 210 and the outdoor heat exchanger 230 serves as the liquid collection heat exchanger 121 of the heat exchange apparatus 120; in the case where the pipeline assembly 130 is in communication with the outdoor heat exchanger 230 and the indoor heat exchanger 210, the liquid collection apparatus 140 includes a first water tank 141 and a second water tank 142; and the first water tank 141 is in communication with the outdoor heat exchanger 230, and the second water tank 142 is in communication with the indoor heat exchanger 210.

In this technical solution, at least one of the indoor heat exchanger 210 and the outdoor heat exchanger 230 may serve as the liquid collection heat exchanger 121 of the heat exchange apparatus 120. Considering that the air conditioning device may be in a cooling or heating mode, and at least one of the outdoor heat exchanger 230 and the indoor heat exchanger 210 of the air conditioning device will serve as an evaporator, in this technical solution, the pipeline assembly 130 is made to be in communication with the outdoor heat exchanger 230 and/or the indoor heat exchanger 210. The air with high water content output via the pipeline assembly 130 is delivered to the one serving as the evaporator between the outdoor heat exchanger 230 and the indoor heat exchanger 210, causing the moisture to condense into air, and then the liquid collection apparatus 140 collects the condensed water via the outdoor heat exchanger 230 and/or the indoor heat exchanger 210, which can improve the production efficiency of water.

As shown in FIG. 3, in a feasible embodiment, the pipeline assembly 130 is in communication with the indoor heat exchanger 210, and the indoor heat exchanger 210 serves as the liquid collection heat exchanger 121 of the heat exchange apparatus 120.

In this technical solution, the indoor heat exchanger 210 serves as the liquid collection heat exchanger 121 of the heat exchange apparatus 120, and based on this, the liquid collection apparatus 140 of the air conditioning device can be arranged indoors. When the air conditioning device is used to cool the indoor environment, the indoor heat exchanger 210 serves as an evaporator, and the outdoor heat exchanger 230 serves as a condenser, the indoor heat exchanger 210 can condense water vapor in the air, and then the liquid collection apparatus 140 collects the liquid condensed by the heat exchange apparatus 120, and then the liquid can be collected in the liquid collection apparatus 140. When the water-using apparatus needs to use water, the liquid stored in the liquid collection apparatus 140 can be supplied to the water-using apparatus. In this way, most of the main structure of the air conditioning device can be disposed indoors, which can improve the user experience while providing liquid water to the air conditioning device. In a feasible embodiment, the pipeline assembly 130 is in communication with the outdoor heat exchanger 230, and the outdoor heat exchanger 230 serves as the liquid collection heat exchanger 121 of the heat exchange apparatus 120.

As shown in FIG. 4, in a feasible embodiment, the pipeline assembly 130 is in communication with the outdoor heat exchanger 230, and the outdoor heat exchanger 230 serves as the liquid collection heat exchanger 121 of the heat exchange apparatus 120.

In this technical solution, the outdoor heat exchanger 230 serves as the liquid collection heat exchanger 121 of the heat exchange apparatus 120, and based on this, the liquid collection apparatus 140 of the air conditioning device can be arranged outdoors. When the air conditioning device is used to heat the indoor environment, the indoor heat exchanger 210 serves as a condenser, and the outdoor heat exchanger 230 serves as an evaporator, the outdoor heat exchanger 230 can condense water vapor in the air, and then the liquid collection apparatus 140 collects the liquid condensed by the heat exchange apparatus 120, and then the liquid can be collected in the liquid collection apparatus 140. When the water-using apparatus needs to use water, the liquid stored in the liquid collection apparatus 140 can be supplied to the water-using apparatus. In this way, most of the main structure of the air conditioning device can be disposed outdoors, which can reduce the indoor space occupied by the air conditioning device while providing liquid water to the air conditioning device, thereby improving the user experience.

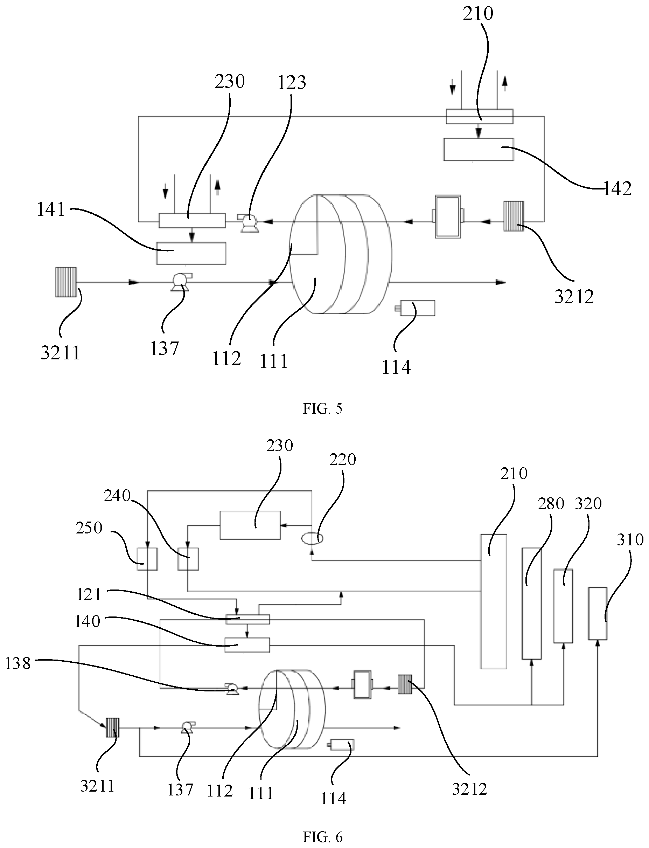

As shown in FIG. 5, in a feasible embodiment, the pipeline assembly 130 is in communication with the outdoor heat exchanger 230 and the indoor heat exchanger 210; the liquid collection apparatus 140 includes the first water tank 141 and the second water tank 142; and the first water tank 141 is in communication with the outdoor heat exchanger 230, and the second water tank 142 is in communication with the indoor heat exchanger 210.

In this technical solution, one of the outdoor heat exchanger 230 and the indoor heat exchanger 210 may serve as the liquid collection heat exchanger 121. When the outdoor heat exchanger 230 serves as the liquid collection heat exchanger 121 of the heat exchange apparatus 120, the liquid collection apparatus 140 of the air conditioning device can be arranged outdoors. When the air conditioning device is used to heat the indoor environment, the indoor heat exchanger 210 serves as a condenser, and the outdoor heat exchanger 230 serves as an evaporator, the outdoor heat exchanger 230 can condense water vapor in the air, and then the liquid collection apparatus 140 collects the liquid condensed by the heat exchange apparatus 120, and then the liquid can be collected in the liquid collection apparatus 140. When the water-using apparatus needs to use water, the liquid stored in the liquid collection apparatus 140 can be supplied to the water-using apparatus. In this way, most of the main structure of the air conditioning device can be disposed outdoors, which can reduce the indoor space occupied by the air conditioning device while providing liquid water to the air conditioning device, thereby improving the user experience. When the indoor heat exchanger 210 serves as the liquid collection heat exchanger 121 of the heat exchange apparatus 120, the liquid collection apparatus 140 of the air conditioning device can be arranged indoors. When the air conditioning device is used to cool the indoor environment, the indoor heat exchanger 210 serves as an evaporator, and the outdoor heat exchanger 230 serves as a condenser, the indoor heat exchanger 210 can condense water vapor in the air, and then the liquid collection apparatus 140 collects the liquid condensed by the heat exchange apparatus 120, and then the liquid can be collected in the liquid collection apparatus 140. When the water-using apparatus needs to use water, the liquid stored in the liquid collection apparatus 140 can be supplied to the water-using apparatus. In this way, most of the main structure of the air conditioning device can be disposed indoors, which can improve the user experience while providing liquid water to the air conditioning device.

In this technical solution, both the outdoor heat exchanger 230 and the indoor heat exchanger 210 may serve as the heat exchange apparatus 120. Based on this, one of the outdoor heat exchanger 230 and the indoor heat exchanger 210 may serve as the evaporator regardless of whether the air is in a cooling state or a heating state. Based on this, the water-using apparatus can enrich liquid water regardless of whether the air conditioning device is in a cooling state or a heating state, which can further improve the water enrichment efficiency and ensure the water usage demand of the water-using apparatus.

In this technical solution, when both the outdoor heat exchanger 230 and the indoor heat exchanger 210 may serve as the heat exchange apparatus 120, the liquid collection apparatus 140 may include the first water tank 141 and the second water tank 142. The first water tank 141 may receive the condensed water generated by the outdoor heat exchanger 230, and the second water tank 142 may receive the condensed water generated by the indoor heat exchanger 210. In this way, two modules can respectively receive the condensed water generated by two heat exchangers, thereby facilitating the enrichment of the condensed water.

In a feasible embodiment, the air conditioning device further includes: a second refrigerant pipeline. The second refrigerant pipeline is in communication with the heat exchange apparatus 120; one end of the second refrigerant pipeline is in communication with the indoor heat exchanger 210, and the other end of the second refrigerant pipeline is in communication with the compressor 220, such that the liquid collection heat exchanger 121 of the heat exchange apparatus 120 is connected in parallel with the outdoor heat exchanger **2**3**0**.

In this technical solution, the air conditioning device may include a second refrigerant pipeline, a second throttling assembly 250, and a first air supply member 137. By means of the arrangement of the second refrigerant pipeline, the liquid collection heat exchanger 121 and the outdoor heat exchanger 230 may be connected in parallel. Based on this, when the air conditioning device is in a heating mode, and the outdoor heat exchanger 230 serves as an evaporator, the liquid collection heat exchanger 121 also serves as an evaporator. The heat exchange apparatus 120 condenses water vapor in the air, and then the liquid, formed by condensation, from the heat exchange apparatus 120 can be collected by the liquid collection apparatus 140; and alternatively, the heat exchange apparatus 120 may also desublimate the water vapor in the air into frost, and after the frost melts, liquid water can also be formed for collection by the liquid collection apparatus 140. By means of the arrangement of the second refrigerant pipeline and the second throttling assembly 250, the control of the temperature of the liquid collection heat exchanger 121 is facilitated, which further facilitates the formation of condensed water or frost, thereby improving the enrichment efficiency of the liquid.

In some examples, the second refrigerant pipeline may be in communication with the indoor heat exchanger 210 or the compressor 220, may be in communication between the compressor 220 and the outdoor heat exchanger 230, or may be in communication between the first throttling assembly 240 and the indoor heat exchanger 210; and it is only required to achieve that the liquid collection heat exchanger 121 is connected in parallel with the outdoor heat exchanger 230, and the communication position of the second refrigerant pipeline on the first refrigeration pipeline is not limited in the present disclosure.

In some examples, as shown in FIG. 6, in a feasible embodiment, the air conditioning device further includes: a second refrigerant pipeline. The second refrigerant pipeline passes through the heat exchange apparatus 120, one end of the second refrigerant pipeline is in communication with the first refrigerant pipeline between the first throttling assembly 240 and the indoor heat exchanger 210, and the other end of the second refrigerant pipeline is in communication with the first refrigerant pipeline between the compressor 220 and the outdoor heat exchanger 230, such that the liquid collection heat exchanger 121 of the heat exchange apparatus 120 is connected in parallel with the outdoor heat exchanger 230. The air conditioning device further includes: a second throttling assembly 250, the second throttling assembly 250 being separately connected to the indoor heat exchanger 210 and the liquid collection heat exchanger 121; and a third air supply member, the third air supply member being configured to supply air to the heat exchange apparatus 120.

In this technical solution, the air conditioning device may include a second refrigerant pipeline, a second throttling assembly 250, and a first air supply member 137. By means of the arrangement of the second refrigerant pipeline, the liquid collection heat exchanger 121 and the outdoor heat exchanger 230 may be connected in parallel. Based on this, when the air conditioning device is in a heating mode, and the outdoor heat exchanger 230 serves as an evaporator, the liquid collection heat exchanger 121 also serves as an evaporator. The heat exchange apparatus 120 condenses water vapor in the air, and then the liquid, formed by condensation, from the heat exchange apparatus 120 can be collected by the liquid collection apparatus 140; and alternatively, the heat exchange apparatus 120 may also desublimate the water vapor in the air into frost, and after the frost melts, liquid water can also be formed for collection by the liquid collection apparatus 140. By means of the arrangement of the second refrigerant pipeline and the second throttling assembly 250, the control of the temperature of the liquid collection heat exchanger 121 is facilitated, which further facilitates the formation of condensed water or frost, thereby improving the enrichment efficiency of the liquid.

In this technical solution, the air conditioning device further includes a third air supply member, and the third air supply member is configured to supply air to the heat exchange apparatus 120. Based on this, in the case where the heat exchange apparatus 120 frosts, supplying air via the third air supply assembly facilitates the melting of the frost.

In a feasible embodiment, the air conditioning device further includes: a third refrigerant pipeline. The third refrigerant pipeline is in communication with the heat exchange apparatus 120, one end of the third refrigerant pipeline is in communication with the first throttling assembly 240, and the other end of the third refrigerant pipeline is in communication with the indoor heat exchanger 210.

In this technical solution, the air conditioning device may further include a third refrigerant pipeline. When the air conditioning device is in a cooling mode, and the indoor heat exchanger 210 serves as an evaporator, the liquid collection heat exchanger 121 also serves as an evaporator. The heat exchange apparatus 120 condenses water vapor in the air, and then the liquid, formed by condensation, from the heat exchange apparatus 120 can be collected by the liquid collection apparatus 140; and alternatively, the heat exchange apparatus 120 may also desublimate the water vapor in the air into frost, and after the frost melts, liquid water can also be formed for collection by the liquid collection apparatus 140. By means of the arrangement of the third refrigerant pipeline and the third throttling assembly, the control of the temperature of the liquid collection heat exchanger 121 is facilitated, which further facilitates the formation of condensed water or frost, thereby improving the enrichment efficiency of the liquid.

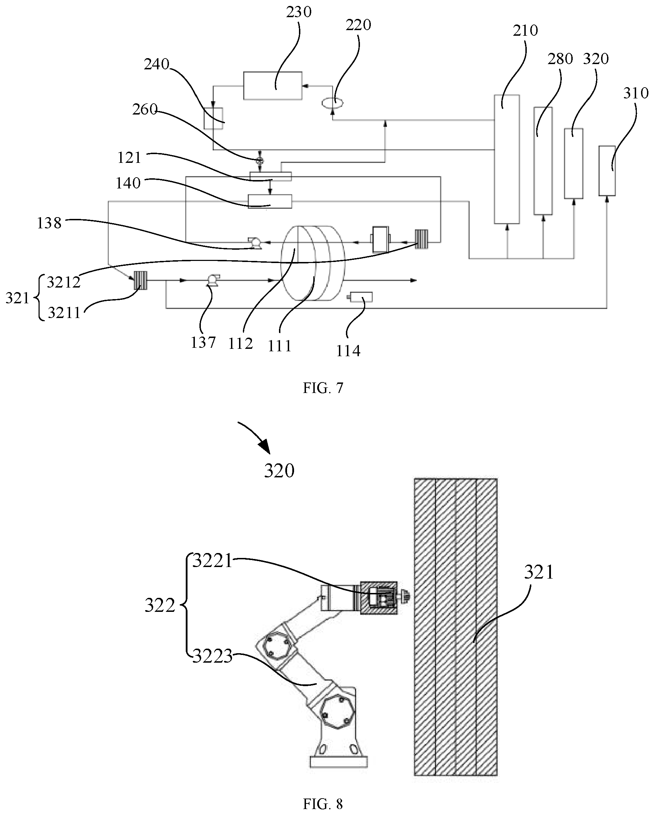

It can be understood that the third refrigerant pipeline may be in communication with the compressor 220, may be in communication with the indoor heat exchanger 210, or may be in communication between the compressor 220 and the indoor heat exchanger 210; and it is only required to achieve a parallel connection between the second liquid collection heat exchanger 270 and the indoor heat exchanger 210, and the communication position of the third refrigerant pipeline on the first refrigeration pipeline is not limited in the present disclosure. As shown in FIG. 7, in a feasible embodiment, the air conditioning device further includes: a third refrigerant pipeline. The third refrigerant pipeline passes through the heat exchange apparatus 120, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. The air conditioner further includes: a third control valve 260, the third control valve 260 being disposed on the third refrigerant pipeline; and a fourth air supply member, the fourth air supply member being configured to supply air to the liquid collection heat exchanger 121 of the heat exchange apparatus 120.

In this technical solution, the air conditioning device may further include a third refrigerant pipeline, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. Based on this, the heat exchange apparatus 120 and the indoor heat exchanger 210 may be connected in parallel. When the air conditioning device is in a cooling mode, and the indoor heat exchanger 210 serves as an evaporator, the liquid collection heat exchanger 121 also serves as an evaporator. The heat exchange apparatus 120 condenses water vapor in the air, and then the liquid, formed by condensation, from the heat exchange apparatus 120 can be collected by the liquid collection apparatus 140; and alternatively, the heat exchange apparatus 120 may also desublimate the water vapor in the air into frost, and after the frost melts, liquid water can also be formed for collection by the liquid collection apparatus 140. By means of the arrangement of the third refrigerant pipeline and the third throttling assembly, the control of the temperature of the liquid collection heat exchanger 121 is facilitated, which further facilitates the formation of condensed water or frost, thereby improving the enrichment efficiency of the liquid.

In this technical solution, the air conditioning device further includes a fourth air supply member, and the fourth air supply member is configured to supply air to the heat exchange apparatus 120. Based on this, in the case where the heat exchange apparatus 120 frosts, supplying air via the fourth air supply assembly facilitates the melting of the frost.

In this technical solution, the air conditioning device may further include a third control valve 260, and the third control valve 260 can control the opening or closing of the third refrigerant pipeline and adjust the opening degree of the third refrigerant pipeline. Based on this, the control of the operation or non-operation of the heat exchange apparatus 120 is facilitated, and meanwhile, the adjustment of the water production efficiency of the heat exchange apparatus 120 is facilitated.

In a feasible embodiment, the air conditioning device further includes: a third housing. The outdoor heat exchanger 230, the compressor 220, and the liquid collection apparatus 140 are disposed in the third housing.

In this technical solution, the air conditioning device may further include a third housing, and the outdoor heat exchanger 230, the compressor 220, and the liquid collection apparatus 140 can be accommodated by means of the arrangement of the third housing. Based on this, in the case where the third housing is arranged outdoors, the outdoor heat exchanger 230, the compressor 220, and the liquid collection apparatus 140 can also be arranged outdoors. In an aspect, the amount of space occupied by the air conditioning device indoors can be reduced, and the user experience can be improved. In another aspect, the noise of the air conditioning device can be reduced, and the user experience can be improved.

As shown in FIGS. 2 to 7, in a feasible embodiment, the air conditioning device further includes: a humidifier 280, the liquid collection apparatus 140 being in communication with the humidifier 280. The humidifier 280 includes a curtain body, and the liquid collection apparatus 140 is configured to output liquid to the curtain body.

In this technical solution, the air conditioning device may further include a humidifier 280, and the humidifier 280 may include a curtain body. When it is necessary to humidify an air environment, liquid can be supplied onto the curtain body by the liquid collection apparatus 140, and then evaporation of the liquid can adjust indoor air humidity.

As shown in FIG. 2, in a feasible embodiment, the air conditioning device further includes: an outdoor unit housing 290, the liquid enrichment assembly 110 and the outdoor heat exchanger 230 being disposed in the outdoor unit housing 290; an indoor unit housing 300, the indoor heat exchanger 210 being disposed in the indoor unit housing 300; and a fresh air module 310, an air intake port of the fresh air module 310 being in communication with a first air inlet of the outdoor unit housing 290, and an output end of the fresh air module 310 being connected to a second air inlet of the indoor unit housing 300.

In this technical solution, the air conditioning device may further include the outdoor unit housing 290, the indoor unit housing 300, and the fresh air module 310. The air intake port of the fresh air module 310 is in communication with the first air inlet of the outdoor unit housing 290, and the output end of the fresh air module 310 is connected to the second air inlet of the indoor unit housing 300. In this way, outdoor air can be introduced indoors, which can improve the air environment.

In a feasible embodiment, the fresh air module 310 further includes: an oxygen production module and an absorption module. The oxygen production module and the absorption module are disposed in a housing of the fresh air module 310.

In this technical solution, the structural configuration of the fresh air module 310 is further provided. The fresh air module 310 may further include the oxygen production module and the absorption module. Oxygen may be produced by means of the arrangement of the oxygen production module, which can further improve the indoor air environment. Toxic and harmful substances in the indoor air can be absorbed by means of the arrangement of the absorption module, and carbon dioxide in the air can also be absorbed, thereby improving the indoor air environment.

In some examples, the oxygen production module may be a molecular sieve oxygen production module, and the absorption module may be a carbon dioxide module.

As shown in FIGS. 2 to 7, in a feasible embodiment, the air conditioning device further includes: a filter apparatus 320, the filter apparatus 320 being configured to filter air entering at least one of the air conditioning device, the outdoor unit housing 290, and the indoor unit housing 300; and a cleaning member 323, an output end of the liquid collection apparatus 140 being in communication with the cleaning member 323, and the cleaning member 323 being configured to clean the filter apparatus 320.

In this technical solution, the air conditioning device may further include the filter apparatus 320, and the air entering at least one of the air conditioning device, the outdoor unit housing 290, and the indoor unit housing 300 may be filtered by means of the arrangement of the filter apparatus 320. In this way, the cleanliness of the liquid water in the liquid collection apparatus 140 can be improved, and the cleanliness of the indoor air can also be improved.

In this technical solution, the air conditioning device may further include the cleaning member 323, and the cleaning member 323 cleans the filter apparatus 320, which can improve the cleanliness of the filter apparatus 320. In addition, the cleaning member 323 is in communication with the output end of the liquid collection apparatus 140, such that the liquid collection apparatus 140 can supply water required for cleaning to the cleaning member 323, and the liquid collection apparatus 140 can collect liquid water automatically, which can reduce or avoid manual water addition and improve the user experience.

In a feasible embodiment, the filter apparatus 320 includes: a first filter member, configured to be disposed at an air inlet of the outdoor unit housing 290; a second filter member, configured to be disposed at an air inlet of the fresh air module 310; or a third filter member, configured to cover both the fresh air module 310 and the first air inlet of the outdoor unit housing 290.

In this technical solution, the structural configuration of the filter apparatus 320 is further provided. The filter apparatus 320 may include the first filter member and the second filter member, so as to cover the air inlet of the outdoor unit housing 290 and the air inlet of the fresh air module 310, respectively, such that the air entering the outdoor unit housing 290 is cleaner, thereby improving the cleanliness of the liquid water. The second filter member can filter the air entering the fresh air module 310, thereby improving the cleanliness of the indoor air.

In this technical solution, the fresh air module 310 and the first air inlet of the outdoor unit housing 290 can also be directly covered by one third filter member, which can also ensure the cleanliness of the liquid water and the cleanliness of the indoor air.

In a feasible embodiment, the filter apparatus 320 further includes: a fourth filter member, configured to be disposed at the air inlet of the indoor unit housing 300; fifth filter members, configured to be disposed at inlets of the moisture intake pipeline 133 and the moisture release pipeline 134 of the pipeline assembly 130; and the cleaning member 323, configured to clean at least one of the first filter member, the second filter member, the third filter member, the fourth filter member, and the fifth filter member.

In this technical solution, the filter apparatus 320 may further include the fourth filter member. By arranging the fourth filter member at the air inlet of the indoor unit housing 300, the cleanliness of the indoor unit of the air conditioning device can be improved, and the maintenance frequency of the air conditioning device can be reduced. By arranging the fifth filter members at the inlets of the moisture intake pipeline 133 and the moisture release pipeline 134, the air entering the heat exchange apparatus 120 can be cleaner.

In this technical solution, at least one of the first filter member, the second filter member, the third filter member, the fourth filter member, and the fifth filter member is cleaned by the cleaning member 323, such that the cleanliness of the first filter member, the second filter member, the third filter member, the fourth filter member, and the fifth filter member can be improved, and the maintenance frequency can be reduced.

As shown in FIG. 2, in some embodiments provided according to the present disclosure, the device main body includes the outdoor unit housing 290. An air inlet includes a first air inlet formed in the outdoor unit housing 290, an air outlet includes a first air outlet formed in the outdoor unit housing 290, the heat exchange apparatus 120 is in communication with the first air inlet and the first air outlet, and the filter apparatus 320 includes a first filter apparatus 3211 for filtering an airflow flowing from the first air inlet to the heat exchange apparatus 120. The liquid collection apparatus 140 includes an outdoor water tank in communication with the heat exchange apparatus 120, and the outdoor water tank is configured to collect condensed water from the heat exchange apparatus 120 and supply water to the first filter apparatus 3211.

The embodiments provide a case where the device main body is the outdoor unit housing 290. It can be understood that the air conditioning device further includes the indoor unit housing 300, the indoor unit housing 300 further includes an indoor unit heat exchanger, and the indoor unit heat exchanger is in communication with an outdoor unit heat exchanger through a refrigerant pipeline to form a refrigerant circulation path.

The air in the outdoor environment enters the outdoor unit housing 290 via the first air inlet in the outdoor unit housing 290, and after undergoing heat exchange treatment by the heat exchange apparatus 120, flows to the outside of the outdoor unit housing 290 via the first air outlet in the outdoor unit housing 290 for discharge. By means of the arrangement of the first filter apparatus 3211, the airflow flowing from the first air inlet to the heat exchange apparatus 120 can be filtered, such that the debris in the air entering the airflow circulation from the outdoor environment can be filtered out, the cleanliness of the airflow participating in the airflow circulation is improved, the unclean airflow is prevented from causing blockage or damaging various mechanisms through which the airflow subsequently circulates, which is beneficial to improving the reliability and service life of various mechanisms through which the airflow flows during the airflow circulation process, improving the reliability of the air conditioning device, improving the cleanliness of the air discharged to the external environment via the outdoor unit housing 290, and reducing the pollution to the environment.

The filter member 321 of the first filter apparatus 3211 may be a filter screen or other filter mechanisms. The filter screen may be disposed at the first air inlet and detachably connected to the housing of the outdoor unit housing 290 to facilitate disassembly and assembly of the first filter apparatus 3211.

The liquid collection apparatus 140 includes the outdoor water tank. The outdoor water tank is in communication with the heat exchange apparatus 120, and is configured to collect the condensed water from the heat exchange apparatus 120 and supply water to the first filter apparatus 3211, such that the condensed water from the heat exchange apparatus 120 in the outdoor unit housing 290 does not need to be discharged to the external environment, thereby avoiding the problems that the discharged condensed water causes water accumulation on the ground and the drainage of the air conditioning device on upper floors may affect the users on lower floors, protecting the environment, and reducing the impact on other users. In addition, the outdoor water tank supplies water to the first filter apparatus 3211, which can achieve the self-cleaning of the first filter apparatus 3211, thereby ensuring a good filtration effect of the first filter apparatus 3211. Moreover, water resources are saved, and use costs are reduced.

It can be understood that the volume of the outdoor water tank is large enough to accommodate the condensed water from the heat exchange apparatus 120. Alternatively, the outdoor water tank is provided with a water level detection apparatus configured to detect the water level in the outdoor water tank. The outdoor water tank is further provided with a drainage part in communication with the external environment. When the water level in the outdoor water tank reaches a preset water level, a detection result of the water level detection apparatus indicates that the water level in the outdoor water tank is high enough, and if the condensed water from the heat exchange apparatus 120 continues to be collected, there is a situation of overflow. In this case, a water valve of the drainage part may be opened to discharge the water in the outdoor water tank to the external environment, so as to keep the water in the outdoor water tank at the preset water level all the time. Since only a small part of the liquid is discharged to the external environment in this case, the impact of water accumulation on the ground and the drainage of the air conditioning device on upper floors on the users on lower floors can be reduced to a large extent.

As shown in FIG. 2, in some embodiments provided according to the present disclosure, the device main body includes the indoor unit housing 300. An air inlet includes a second air inlet formed in the indoor unit housing 300, an air outlet includes a second air outlet formed in the indoor unit housing 300, the heat exchange apparatus 120 includes an indoor heat exchange apparatus 120 located on an indoor unit device main body, and the filter apparatus 320 includes a second filter apparatus 3212 disposed at the second air inlet.

The filter apparatus 320 includes the second filter apparatus 3212 disposed at the second air inlet. By means of the arrangement of the second filter apparatus 3212, the airflow flowing into the indoor unit housing 300 via the outdoor unit housing 290 is filtered, which is beneficial to improving the cleanliness of the airflow flowing into the indoor unit housing 300, preventing the unclean airflow from causing blockage or damaging the heat exchange apparatus 120 and the mechanisms through which the airflow subsequently flows, improving the reliability and service life of the heat exchange apparatus 120 and the mechanisms through which the airflow subsequently flows, improving the reliability of the air conditioning device, improving the cleanliness of the air flowing into the indoor environment via the indoor unit housing 300, and improving user comfort.

In an example, the outdoor water tank is also in communication with the heat exchange apparatus 120, and is configured to supply water to the second filter apparatus 3212, such that the liquid in the outdoor water tank is consumed using the second filter apparatus 3212. As a result, the condensed water from the heat exchange apparatus 120 in the outdoor unit housing 290 does not need to be discharged to the external environment, thereby avoiding the problems that the discharged condensed water causes water accumulation on the ground and the drainage of the air conditioning device on upper floors may affect the users on lower floors, protecting the environment, and reducing the impact on other users. In addition, the outdoor water tank supplies water to the second filter apparatus 3212, which can achieve the self-cleaning of the second filter apparatus 3212, thereby ensuring a good filtration effect of the second filter apparatus 3212. Moreover, this arrangement can save water resources and reduce use costs.

In another example, the liquid collection apparatus 140 includes an indoor water tank in communication with the indoor heat exchange apparatus 120, and the indoor water tank is in communication with the second filter apparatus 3212 to supply water to the second filter apparatus 3212. Therefore, the indoor water tank is used to collect the condensed water from the second heat exchanger, such that the condensed water from the indoor heat exchanger in the indoor unit housing 300 can be used, thereby preventing the condensed water from the indoor heat exchanger from failing to be effectively used and seeping to the outside of the indoor unit housing 300, which may affect the indoor environment. As a result, the cleanliness of the indoor environment is protected. In addition, the indoor water tank supplies water to the second filter apparatus 3212, which can achieve the self-cleaning of the second filter apparatus 3212, thereby ensuring a good filtration effect of the second filter apparatus 3212. Moreover, water resources are saved, and use costs are reduced.

In some examples, the outdoor water tank and the indoor water tank may be integrated into one water tank to be mounted in the outdoor unit housing 290 or the indoor unit housing 300. Alternatively, the outdoor water tank and the indoor water tank are two independent water tanks to be mounted in the outdoor unit housing 290 or the indoor unit housing 300, respectively. It can be understood that the indoor water tank and/or the outdoor water tank may be divided into a plurality of water tanks according to the purpose. For example, the outdoor water tank may be divided into a washing sub-water tank, a humidification sub-water tank, a clean water sub-water tank, and a wastewater sub-water tank according to the purpose, and may further include assemblies for maintaining the operation of the system, such as a disinfectant sub-water tank and a fragrance sub-water tank.

In some embodiments provided according to the present disclosure, the air conditioning device further includes: the fresh air module 310. One end of the fresh air module 310 is in communication with the first air inlet through a connecting pipeline, and the other end of the fresh air module is in communication with the indoor unit housing 300.

The filter apparatus 320 further includes a third filter apparatus configured to filter the airflow in the fresh air module 310. By means of the arrangement of the third filter apparatus, the airflow flowing into a fresh air pipeline of the fresh air module 310 from the external environment through the first air inlet can be filtered, and thus the blockage of or damage to other mechanisms of the fresh air module 310 due to the unclean airflow in the fresh air pipeline can be reduced, thereby improving the service life of other mechanisms of the fresh air module 310. In addition, the cleanliness of the airflow flowing into the indoors via the fresh air module 310 can be improved.

The outdoor water tank and/or the indoor water tank are configured to supply water to the third filter apparatus; that is, the liquid used by the third filter apparatus may be the condensed water from the indoor heat exchanger in the outdoor unit housing 290. Therefore, the condensed water from the indoor heat exchanger can be consumed using the third filter apparatus, thereby avoiding the problems that the condensed water from the indoor heat exchanger is directly discharged outside to cause water accumulation on the ground and the drainage of the air conditioning device on upper floors may affect the users on low floors, protecting the environment, and reducing the impact on other users. In addition, water resources are saved.

The first filter apparatus 3211 is disposed at the first air inlet, and is further configured to filter the airflow flowing from the first air inlet to the liquid enrichment assembly 110, such that the airflow flowing from the first air inlet to the liquid enrichment assembly 110 is clean, thereby improving the cleanliness of the airflow flowing through the liquid enrichment assembly 110, improving the service life and reliability of the liquid enrichment assembly 110. In addition, the cleanliness of the air discharged into the outdoor environment via the first air outlet is improved, and the pollution to the environment is reduced.

In the embodiments, the first filter apparatus 3211 may be used to filter both the airflow flowing from the first air inlet to the liquid enrichment assembly 110 and the airflow flowing to the indoor heat exchanger, to simplify the arrangement of filtering components, thereby meeting the design requirements of the outdoor unit housing 290 for a compact structure and a small volume, and reducing the manufacturing cost.

In another example, the first filter apparatus 3211 is located in an air inlet branch connected to the indoor heat exchanger. The filter apparatus 320 further includes a fourth filter apparatus, the fourth filter apparatus is located in an air inlet branch connected to the liquid enrichment assembly 110 and/or located in the liquid enrichment assembly 110, and the outdoor water tank is further configured to supply water to the fourth filter apparatus 320.

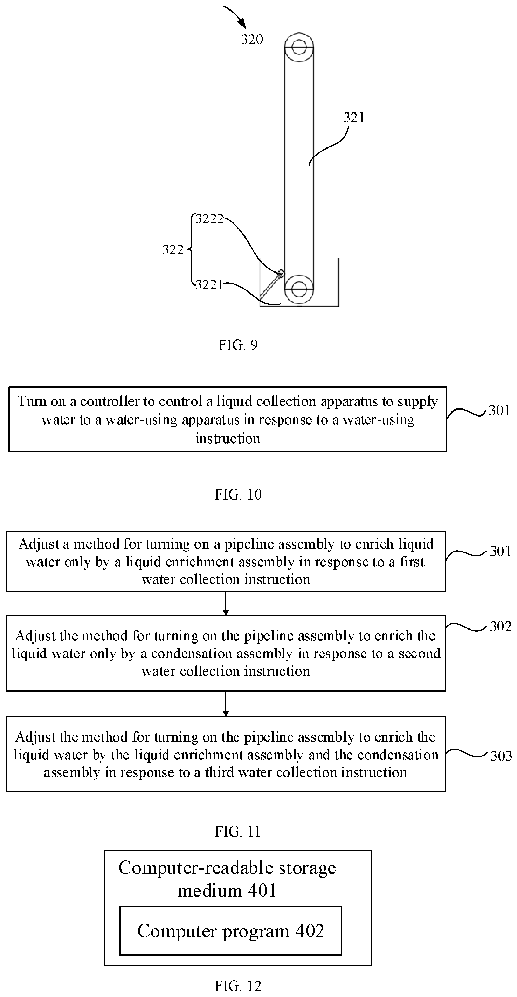

As shown in FIG. 10, according to a third aspect of the embodiments of the present disclosure, a control method is provided. The control method is used to control the air conditioning device according to any one of the above technical solutions,

In step 301, a controller is turned on to control a liquid collection apparatus to supply water to a water-using apparatus in response to a water-using instruction.
As shown in FIG. 11, in a feasible embodiment, the control method includes:
In step 302, a conduction mode of a pipeline assembly is adjusted to enrich liquid water only by a liquid enrichment assembly in response to a first water collection instruction.

In step 303, the conduction mode of the pipeline assembly is adjusted to enrich the liquid water only by a heat exchange apparatus in response to a second water collection instruction.

In step 304, the conduction mode of the pipeline assembly is adjusted to enrich the liquid water by the liquid enrichment assembly and the heat exchange apparatus in response to a third water collection instruction.

According to the control method provided according to the embodiments of the present disclosure, different water collection instructions may be responded to. In the case of responding to the first water collection instruction, the liquid water is enriched only by the liquid enrichment assembly, air can be introduced from the outside, and the air can be in contact with the liquid enrichment assembly, the enrichment part of the liquid enrichment assembly can capture moisture or water vapor in the air, and then the regeneration part can release the enriched moisture and water vapor, such that the liquid enrichment assembly can collect the liquid water. In the case of responding to the second water collection instruction, the liquid water can be enriched only by the heat exchange apparatus. The external air can also be introduced into the heat exchange apparatus, the air exchanges heat with the heat exchange apparatus at a lower temperature, the moisture in the air condenses at a low temperature to form a condensate or frost, and the condensate or the melted frost can be collected by the liquid enrichment assembly. In the case of responding to the third water collection instruction, liquid water is enriched by the liquid enrichment assembly and the heat exchange apparatus. The external air can also be first introduced into the liquid enrichment assembly, the moisture is enriched by the liquid enrichment assembly, and then the water content of the air discharged via the liquid enrichment assembly will increase, and this part of the air can be discharged into the heat exchange apparatus for further condensation. Based on this, the heat exchange apparatus and the liquid enrichment assembly jointly produce liquid water, such that the generation efficiency of the liquid water is higher. Based on this, the air conditioning device can be provided with different water collection methods. The liquid water can be collected in the air, and then the liquid water can be stored by the liquid enrichment assembly. When an electrical appliance, such as an air conditioning device, needs to use the liquid water, the liquid water can be directly output via the liquid enrichment assembly without additionally filling water, and the user does not need to fill water, which can improve the user experience and ensure the smooth execution of the water-using function of the electrical appliance.

In a feasible embodiment, a step of adjusting the conduction mode of the pipeline assembly to enrich the liquid water only by the liquid enrichment assembly in response to the first water collection instruction includes: controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and controlling the moisture intake pipeline and the moisture release pipeline of the pipeline assembly to open, such that the liquid water is collected into the liquid enrichment assembly.

In this technical solution, a step of enriching the liquid water only by the liquid enrichment assembly is further provided. The external air comes into contact with the liquid enrichment assembly through the input pipeline and is then discharged via the output pipeline. In this process, the liquid enrichment assembly can capture the moisture and water vapor in the air. When liquid water enrichment is required, the airflow can be output through the moisture intake pipeline. The airflow flows through the liquid enrichment assembly and is then discharged via the moisture release pipeline. The discharged air can also carry a large amount of moisture, and this part of the moisture can be collected by the liquid enrichment assembly.

In a feasible embodiment, a step of adjusting the conduction mode of the pipeline assembly to enrich the liquid water only by the heat exchange apparatus in response to the second water collection instruction includes: in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with a liquid enrichment assembly to serve as an evaporator to form condensed water and/or frost; and collecting the condensed water and/or water from melted frost by the liquid enrichment assembly.

In this technical solution, a step of enriching the liquid water only by the heat exchange apparatus is further provided. The heat exchange apparatus can be turned on, such that the heat exchange apparatus serves as the evaporator, and then the external air enters the heat exchange apparatus through the input pipeline and the moisture release pipeline, and the moisture condenses or frosts, and then the air is discharged out of the air conditioning device through the moisture intake pipeline and the output pipeline, and the liquid after condensation or frosting can be collected by the liquid enrichment assembly.

In a feasible embodiment, a step of adjusting the conduction mode of the pipeline assembly to enrich the liquid water by the liquid enrichment assembly and the heat exchange apparatus in response to the third water collection instruction includes: in response to the third water collection instruction, controlling, by the first control valve of the pipeline assembly, the input pipeline to be connected to both the output pipeline and the moisture release pipeline, and controlling, by the second control valve of the pipeline assembly, the output pipeline to be connected to both the input pipeline and the moisture intake pipeline; controlling a heat exchanger in communication with the liquid enrichment assembly to serve as an evaporator to form condensed water and/or frost, and enriching the water molecules by the liquid enrichment assembly; and collecting the condensed water, water from melted frost, and regenerated water from the liquid enrichment assembly by the liquid enrichment assembly.

In this technical solution, the specific step of enriching the liquid water by the liquid enrichment assembly and the heat exchange apparatus is further provided. The external air is introduced via the input pipeline, and moisture and water vapor in the external air are captured by the liquid enrichment assembly and then flow out via the output pipeline. When the moisture is enriched, the airflow is output via the moisture intake pipeline, part of the airflow is discharged via the output pipeline, and part of the airflow enters the liquid enrichment assembly and carries the moisture and water vapor enriched onto the liquid enrichment assembly to enter the moisture release pipeline. Meanwhile, part of the airflow in the input pipeline also enters the moisture release pipeline and then enters the condensation assembly for condensation. Through condensation, a condensate or frost can be formed, and finally, the condensate and the melted frost are collected by the liquid enrichment assembly, such that the liquid water can be enriched. In this way, the distribution of the air pressure in the air conditioning device is more uniform, further facilitating the production of liquid water.

In a feasible embodiment, a step of collecting the condensed water, the water from the melted frost, and the regenerated water from the liquid enrichment assembly by the liquid enrichment assembly includes: upon formation of the frost on the evaporator, controlling controlling the first control valve to disconnect the path between the input pipeline and the moisture release pipeline, and controlling the second control valve to disconnect the path between the output pipeline and the moisture intake pipeline, and defrosting the evaporator using air flowing through a regeneration part.

In this technical solution, upon the formation of the frost on the evaporator, the first control valve may be controlled to disconnect the path between the input pipeline and the moisture release pipeline, and the second control valve may be controlled to disconnect the path between the output pipeline and the moisture intake pipeline, such that moisture intake pipeline is connected to the moisture release pipeline, and the evaporator can be defrosted using the residual heat of the air flowing through the regeneration part, which is beneficial to the collection of the liquid water and can reduce the energy consumption.

In a feasible implementation, the control method further includes: generating, based on a water usage demand, the first water collection instruction, the second water collection instruction, or the third water collection instruction; and/or generating, based on a water content of external air, the first water collection instruction, the second water collection instruction, or the third water collection instruction.

In this technical solution, the control method further includes selectively generating, based on the water usage demand, the first water collection instruction, the second water collection instruction, or the third water collection instruction; that is, a water collection instruction can be generated automatically based on the user's demand, making the water collection action capable of adapting to the water usage demand, such that the collection of liquid water better satisfies the user's demand.

In this technical solution, the control method can also selectively generate, based on the water content of external air, the first water collection instruction, the second water collection instruction, or the third water collection instruction; that is, a water collection instruction can be generated based on the content of moisture in external air, making the water collection action capable of adapting to the water content of external air, ensuring that sufficient liquid water can be produced.

It can be understood that the air conditioning device is configured to adjust the temperature for an indoor space, and the water content of external air refers to the water content of outdoor air.

In a feasible implementation, a step of generating, based on the water usage demand, the first water collection instruction, the second water collection instruction, or the third water collection instruction includes: generating the second water collection instruction in the case where the water usage demand is less than a first threshold; generating the first water collection instruction in the case where the water usage demand is greater than or equal to the first threshold and less than a second threshold; and generating the third water collection instruction in the case where the water usage demand is greater than or equal to the second threshold. The value of the first threshold is less than that of the second threshold.

In this technical solution, a step of generating a specific water collection instruction based on the water usage demand is further provided. If the water usage demand is less than the first threshold, it indicates that the requirement of the user or the air conditioning device for the water usage amount is not high. In this case, the second water collection instruction can be generated, and the collection of liquid water is performed only using condensed water produced by the evaporator of the air conditioning device. When the water usage demand is greater than or equal to the first threshold and less than the second threshold, it indicates that the requirement of the air conditioning device or the user for the water usage amount is relatively high. In this case, the liquid enrichment assembly, the first pipeline assembly, and the second pipeline assembly of the air conditioning device can be used to collect the liquid water, to meet the demand for the water usage amount. When the water usage amount is greater than or equal to the second threshold, it indicates that the water usage demand of the user or the air conditioning device is very high. In this case, the third water collection instruction can be generated; moisture is first enriched using the liquid enrichment assembly of the air conditioning device, and then the collection of liquid water is performed using the evaporator of the air conditioning device, thereby maximizing the enrichment efficiency of the liquid water and meeting the demand for the water usage amount.

In a feasible embodiment, a step of generating, based on the water content in the external air, the first water collection instruction, the second water collection instruction, or the third water collection instruction includes: generating the third water collection instruction in the case where the water content is less than a third threshold; generating the first water collection instruction in the case where the water content is greater than or equal to the third threshold and less than a fourth threshold; and generating the second water collection instruction in the case where the water content is greater than a fifth threshold. The value of the third threshold is less than that of the fourth threshold.

In this technical solution, a step of generating a specific water collection instruction based on the water content is further provided. If the water usage demand is less than the fourth threshold, it indicates that the water content in the outdoor air is very low. In this case, the third water collection instruction can be generated; moisture is first enriched using the liquid enrichment assembly of the air conditioning device, and then the collection of liquid water is performed using the evaporator of the air conditioning device, thereby maximizing the enrichment efficiency of the liquid water and meeting the demand for the water usage amount. When the water content is greater than or equal to the fourth threshold and less than the fifth threshold, it indicates that there is a certain amount of water content in the external air. In this case, the liquid enrichment assembly, the first pipeline assembly, and the second pipeline assembly of the air conditioning device can be used to collect the liquid water to meet the demand for the water usage amount. When the water content is greater than or equal to the fifth threshold, it indicates that the water content in the air is very high. In this case, the second water collection instruction can be directly generated; the collection of liquid water is performed only using condensed water produced by the evaporator of the air conditioning device, which is sufficient to meet the water usage demand. In addition, energy consumption can be reduced.

As shown in FIG. 12, according to a third aspect of the embodiments of the present disclosure, a computer-readable storage medium 401 is provided. The computer-readable storage medium 401 stores a computer program 402 to implement the control method according to any one of the above technical solutions.

The computer-readable storage medium 401 provided according to the embodiments of the present disclosure implements the control method according to any one of the above technical solutions. Therefore, the computer-readable storage medium 401 possesses all beneficial effects of the control method according to any one of the above technical solutions, which will not be repeated herein.

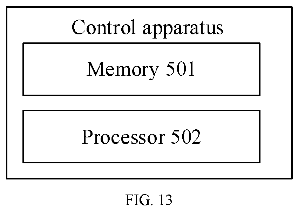

As shown in FIG. 13, according to a fourth aspect of the embodiments of the present disclosure, a control apparatus is provided. The control apparatus includes: a memory 501 storing a computer program; and a processor 502 executing the computer program. The processor 502, when executing the computer program, implements the control method according to any one of the above technical solutions.

Those skilled in the art can understand that the drawings are merely schematic diagrams of a preferred implementation scenario, and the units or processes shown in the drawings are not necessarily required for implementing the present disclosure. Those skilled in the art can understand that units of the apparatus in the implementation scenario may be distributed in the apparatus in the implementation scenario based on the description of the implementation scenario, or may be correspondingly modified to be located in one or more apparatuses different from that in the present implementation scenario. The units in the above implementation scenario may be combined into one unit, or may be further divided into a plurality of subunits.

The serial numbers of the present disclosure are merely for description, and do not represent the advantages and disadvantages of the implementation scenarios. The content disclosed above is merely several specific implementation scenarios according to the present disclosure, but the present disclosure is not limited thereto. Any variation that can be conceived by those skilled in the art shall fall within the protection scope of the present disclosure.

## Claims

1. An air conditioning device, wherein the air conditioning device comprises:
a liquid collection apparatus, a heat exchange apparatus, a water-using apparatus, and a controller, wherein
one end of the liquid collection apparatus is in communication with the heat exchange apparatus, the other end of the liquid collection apparatus is in communication with the water-using apparatus, and the controller is configured to control the liquid collection apparatus to supply water to the water-using apparatus,
the liquid collection apparatus being configured to collect condensed water generated by the heat exchange apparatus.

2. The air conditioning device according to claim 1, wherein the air conditioning device further comprises:
a device main body, the device main body being provided with an air inlet and an air outlet, and the liquid collection apparatus, the heat exchange apparatus, the water-using apparatus, and the controller being all disposed in the device main body;
the water-using apparatus comprising a filter apparatus, the filter apparatus comprising a filter member and a cleaning member, the filter member being configured to filter an airflow flowing from the air inlet to the air outlet, the cleaning member comprising a water-using part in communication with the liquid collection apparatus, and the water-using part being configured to apply a liquid in the liquid collection apparatus to the filter member to clean the filter member.

3. The air conditioning device according to claim 2, wherein
the water-using part comprises a spray head, and a nozzle of the spray head faces the filter member; and/or
the water-using part comprises a water tank, and at least part of the filter member may be accommodated in the water tank.

4. The air conditioning device according to claim 2, wherein
the cleaning member further comprises a cleaning part, and the cleaning part is configured to interfere with the filter member to remove debris on the filter member; and/or
the cleaning member further comprises a motion part, the motion part is configured to drive the filter member and/or the water-using part to move to remove the debris on the filter member, and the motion part at least comprises at least one of vibration, swing, or rotation.

5. The air conditioning device according to any one of claims 1 to 4, wherein the air conditioning device further comprises:
a liquid enrichment assembly, the liquid enrichment assembly comprising an enrichment part and a regeneration part; and
a pipeline assembly, the pipeline assembly connecting the liquid enrichment assembly and the heat exchange apparatus, and the liquid collection apparatus being in communication with the heat exchange apparatus and/or the liquid enrichment assembly.

6. The air conditioning device according to claim 5, wherein the pipeline assembly comprises:
an input pipeline in communication with the liquid enrichment assembly and disposed upstream of an airflow in the enrichment part;
an output pipeline in communication with the liquid enrichment assembly and disposed downstream of the airflow in the enrichment part;
a moisture intake pipeline in communication with the heat exchange apparatus and disposed upstream of an airflow in the regeneration part;
a moisture release pipeline, one end of the moisture release pipeline being in communication with the liquid enrichment assembly and disposed downstream of the airflow in the regeneration part, and the other end of the moisture release pipeline being in communication with the heat exchange apparatus;
a first control valve, the first control valve being configured to communicate the input pipeline with the moisture release pipeline; and
a second control valve, the second control valve being configured to communicate the output pipeline with the moisture intake pipeline.

7. The air conditioning device according to claim 6, wherein the liquid enrichment assembly further comprises:
a first air supply member disposed in the input pipeline and/or the output pipeline and configured to cause air to flow through the enrichment part of the liquid enrichment assembly; and
a second air supply member disposed in the moisture intake pipeline and/or the moisture release pipeline and configured to cause air to flow through the regeneration part of the liquid enrichment assembly.

8. The air conditioning device according to claim 6, wherein
the first control valve is further configured to adjust an opening degree between the input pipeline and the moisture release pipeline; and
the second control valve is further configured to adjust an opening degree between the output pipeline and the moisture intake pipeline.

9. The air conditioning device according to claim 5, wherein the liquid enrichment assembly comprises:
a first housing, the enrichment part and the regeneration part being formed on the first housing;
a moisture adsorption member disposed in the first housing; and
a regeneration member configured to supply energy to the regeneration part to desorb water molecules.

10. The air conditioning device according to claim 9, wherein the liquid enrichment assembly comprises:
an enrichment member configured to supply energy to the enrichment part;
the enrichment member comprises at least one of a phase change heat exchanger, a Peltier effect heat exchanger, a fan, a liquid cooling heat exchanger, and a vortex tube; and/or
the regeneration member comprises at least one of: thermal radiation, a hot end of a heat pump, a hot end of a heat pipe, and a solar heat source; and/or the liquid enrichment assembly further comprises:
a driving member connected to the moisture adsorption member and configured to drive the moisture adsorption member to rotate.

11. The air conditioning device according to any one of claims 1 to 4, wherein the heat exchange apparatus comprises:
a liquid collection heat exchanger, the liquid collection heat exchanger being configured to form condensed water and/or frost, and the liquid collection apparatus collecting, through an input end, the condensed water and/or liquid formed by melting of the frost:
a second housing, the liquid collection heat exchanger being disposed in the second housing, the second housing being configured to collect the condensed water and/or the liquid formed by the melting of the frost, the input end of the liquid collection apparatus being in communication with the second housing, and a pipeline assembly being in communication with the second housing.

12. The air conditioning device according to claim 5, wherein the air conditioning device further comprises:
an indoor heat exchanger;
a compressor, the compressor being connected to the indoor heat exchanger;
an outdoor heat exchanger, the outdoor heat exchanger being connected to the compressor;
a first throttling assembly, the throttling assembly being separately connected to the outdoor heat exchanger and the indoor heat exchanger; and
a first refrigerant pipeline, the refrigerant pipeline being in communication with the indoor heat exchanger, the compressor, the outdoor heat exchanger, and the first throttling assembly to form a refrigerant circulation.

13. The air conditioning device according to claim 12, wherein
the pipeline assembly is in communication with at least one of the indoor heat exchanger and the outdoor heat exchanger, and at least one of the indoor heat exchanger and the outdoor heat exchanger serves as a liquid collection heat exchanger of the heat exchange apparatus; and
in a case where the pipeline assembly is in communication with the outdoor heat exchanger and the indoor heat exchanger, the liquid collection apparatus comprises a first water tank and a second water tank, the first water tank is in communication with the outdoor heat exchanger, and the second water tank is in communication with the indoor heat exchanger.

14. The air conditioning device according to claim 12, wherein the air conditioning device further comprises:
a second refrigerant pipeline, the second refrigerant pipeline being in communication with the heat exchange apparatus, one end of the second refrigerant pipeline being in communication with the indoor heat exchanger, and the other end of the second refrigerant pipeline being in communication with the compressor, such that a liquid collection heat exchanger of the heat exchange apparatus is connected in parallel with the outdoor heat exchanger;
a second throttling assembly, the second throttling assembly being separately connected to the indoor heat exchanger and the liquid collection heat exchanger; and/or,
a third air supply member, the third air supply member being configured to supply air to the heat exchange apparatus.

15. The air conditioning device according to claim 12, wherein the air conditioning device further comprises:
a third refrigerant pipeline, the third refrigerant pipeline being in communication with the heat exchange apparatus, one end of the third refrigerant pipeline being in communication with the first throttling assembly, and the other end of the third refrigerant pipeline being in communication with the indoor heat exchanger;
a third control valve, the third control valve being disposed on the third refrigerant pipeline; and/or
a fourth air supply member, the fourth air supply member being configured to supply air to a liquid collection heat exchanger of the heat exchange apparatus.

16. The air conditioning device according to claim 12, wherein the air conditioning device further comprises:
a third housing, the outdoor heat exchanger, the compressor, and the liquid collection apparatus being disposed in the third housing.

17. The air conditioning device according to claim 12, wherein the air conditioning device further comprises:
an outdoor unit housing, the liquid enrichment assembly and the outdoor heat exchanger being disposed in the outdoor unit housing;
an indoor unit housing, the indoor heat exchanger being disposed in the indoor unit housing; and
a fresh air module, an air intake port of the fresh air module being in communication with a first air inlet of the outdoor unit housing, and an output end of the fresh air module being connected to a second air inlet of the indoor unit housing.

18. A control method for controlling the air conditioning device according to any one of claims 1 to 17, wherein the control method comprises:
turning on a controller to control a liquid collection apparatus to supply water to a water-using apparatus in response to a water-using instruction.

19. The control method according to claim 18, wherein the control method further comprises:
adjusting a conduction mode of a pipeline assembly to enrich liquid water only by a liquid enrichment assembly in response to a first water collection instruction;
adjusting the conduction mode of the pipeline assembly to enrich the liquid water only by a heat exchange apparatus in response to a second water collection instruction; and
adjusting a conduction mode of a channel assembly to enrich the liquid water by the liquid enrichment assembly and the heat exchange apparatus in response to a third water collection instruction.

20. The control method according to claim 19, wherein a step of adjusting the conduction mode of the pipeline assembly to enrich the liquid water only by the liquid enrichment assembly in response to the first water collection instruction comprises:
controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and
controlling the moisture intake pipeline and the moisture release pipeline of the pipeline assembly to open, such that the liquid water is collected into the liquid collection apparatus.

21. The control method according to claim 19, wherein a step of adjusting the conduction mode of the pipeline assembly to enrich the liquid water only by the heat exchange apparatus in response to the second water collection instruction comprises:
in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with the liquid collection apparatus to serve as an evaporator to form condensed water and/or frost; and
collecting the condensed water and/or water from melted frost by the liquid collection apparatus.

22. The control method according to claim 20, wherein a step of adjusting the conduction mode of the pipeline assembly to enrich the liquid water by the liquid enrichment assembly and the heat exchange apparatus in response to the third water collection instruction comprises:
in response to the third water collection instruction, controlling, by the first control valve of the pipeline assembly, the input pipeline to be connected to both the output pipeline and the moisture release pipeline, and controlling, by the second control valve of the pipeline assembly, the output pipeline to be connected to both the input pipeline and the moisture intake pipeline;
controlling a heat exchanger in communication with the liquid collection apparatus to serve as an evaporator to form condensed water and/or frost, and enriching the water molecules by the liquid enrichment assembly; and
collecting the condensed water, water from melted frost, and regenerated water from the liquid enrichment assembly by the liquid collection apparatus.

23. The control method according to claim 22, wherein a step of collecting the condensed water, the water from the melted frost, and the regenerated water from the liquid enrichment assembly by the liquid collection apparatus comprises:
upon formation of the frost on the evaporator, controlling controlling the first control valve to disconnect the path between the input pipeline and the moisture release pipeline, and controlling the second control valve to disconnect the path between the output pipeline and the moisture intake pipeline, and defrosting the evaporator using air flowing through a regeneration part.

24. The control method according to any one of claims 18 to 23, wherein the control method further comprises:
generating, based on a water usage demand, the first water collection instruction, the second water collection instruction, or the third water collection instruction; and/or
generating, based on a water content of external air, the first water collection instruction, the second water collection instruction, or the third water collection instruction.

25. The control method according to claim 24, wherein
a step of generating, based on the water usage demand, the first water collection instruction, the second water collection instruction, or the third water collection instruction comprises:
generating the second water collection instruction in a case where the water usage demand is less than a first threshold;
generating the first water collection instruction in a case where the water usage demand is greater than or equal to the first threshold and less than a second threshold; and
generating the third water collection instruction in a case where the water usage demand is greater than or equal to the second threshold,
wherein a value of the first threshold is less than that of the second threshold; and
a step of generating, based on the water content of the external air, the first water collection instruction, the second water collection instruction, or the third water collection instruction comprises:
generating the third water collection instruction in a case where the water content is less than a third threshold;
generating the first water collection instruction in a case where the water content is greater than or equal to the third threshold and less than a fourth threshold; and
generating the second water collection instruction in a case where the water content is greater than a fifth threshold,
wherein a value of the third threshold is less than that of the fourth threshold.

26. A computer-readable storage medium, wherein
the computer-readable storage medium stores a computer program to implement the control method according to any one of claims 18 to 25.

27. A control apparatus, wherein the control apparatus comprises:
a memory storing a computer program; and
a processor executing the computer program,
wherein the processor, when executing the computer program, implements the control method according to any one of claims 18 to 25.
